# EUROPÄISCHE PATENTANMELDUNG

(11) **EP 4 464 581 A1**
(43) Veröffentlichungstag der Anmeldung: **20.11.2024**
(21) Anmeldenummer: 24401013.8
(22) Anmeldetag: 25.04.2024
(51) Int. Cl.: B62M 1/12, B62M 1/16

(54) **FAHRRAD ODER HEIMTRAINER MIT ARM- UND BEINANTRIEB**

(30) Priorität: 25.04.2023 DE 102023110606; 27.09.2023 DE 102023126207
(71) Anmelder: Kraiß, Martin, 89077 Ulm (DE)
(72) Erfinder: Kraiß, Martin, 89077 Ulm (DE)

(57) **Zusammenfassung**

Bei bekannten Fahrrädern mit Beinkurbel und seilbetätigtem Ruderantrieb wird die Armantriebskraft nur in Zugrichtung übertragen. Die Oberkörperkraft in Druckrichtung wird hier nicht zum Antrieb genutzt. Deren Sitzschale befindet sich nahe der Lenkachse, was bei einer Vollbremsung zum Überschlag führen kann. Bei anderen bekannten Fahrrädern erfolgt der Lenker-Armantrieb über einen Pleuelantrieb. Dieser ist mechanisch aufwendig und hat einen unerwünschten Totpunkt in der Armantriebsbewegung.

Die Erfindung ist ein Fahrrad oder Heimtrainer mit Arm- und Beinantrieb. Bei der Erfindung schwenkt der Fahrer einen Armhebel vor und zurück und überträgt dabei die Zug- und Druckkraft, mittels jeweils eines Seils und eines Freilaufes, auf den Beinkurbelantrieb. Der Armhebel ist schwenkbar in der Gabeleinheit gelagert und lenkt direkt das Vorderrad, ohne aufwendige Mechanik. Der Seilantrieb gewährleistet einen linearen Antrieb ohne Totpunkt. Der Fahrer kann seine Beinkraft und seine Armkraft in Zug- und Druckrichtung für den Vortrieb des Fahrrades nutzen und das Fahrad sicher und einfach fahren.

## Beschreibung

Bei der Erfindung handelt es sich um ein Fahrrad oder Lastenrad, das über Arm- und Beinantrieb, verfügt. Alternativ ist das erfindungsgemäße Fahrrad ein Heimtrainer mit Arm- und Beinantrieb.

Bekannte Fahrräder oder Heimtrainern mit Beinkurbel und Lenker, bei denen der Lenker gleichzeitig als Armantrieb dient, treiben bei Zugbewegungen des kombinierten Lenker-Armantriebes über ein Zugseil die Tretkurbel an. Die PCT/EP2006/003369 offenbart ein Fahrrad gemäß dem Oberbegriff der unabhängigen Ansprüche 1 und 7. Bei diesem bekannten Fahrrad überträgt der Fahrer mit seiner Armkraft nur in Zugrichtung, mittels des Zugseiles 10, eine Antriebskraft auf die Tretkurbel 5 umfassenden Pedalantrieb und somit auch auf den Antriebsstrang des Fahrrades. In Druckrichtung überträgt der Fahrer mit seinen Armen keine Antriebskraft auf die Tretkurbel und somit auch keine Antriebskraft auf den Antriebsstrang des Fahrrades. Die Druckrichtung des Lenker-Armantriebes ist lediglich die Rückholbewegung des Armantriebes, bei der das Antriebsseil, für die darauf folgende Zugbewegung des Armantriebes, eingezogen wird. Für die Rückholbewegung in Druckrichtung des Armantriebes wird vom Fahrer kaum eine Kraft benötig.

Der Nachteil dieser bekannten Fahrräder ist, dass deren kombinierter Lenker-Armantrieb, zum Antreiben des Fahrrades, nur die Zugrichtung nutzen.

Somit werden nur einzelne Muskelgruppen des Oberkörpers zum Antrieb benutzt und der Trainingseffekt, bei dem eine hohe Armkraft benötigt wird, ist einseitig auf die Zugbewegung begrenzt und führt zu einem überproportionalem Training der Rückenmuskulatur und des Bizeps, wobei die Brust- und Bauchmuskulatur und der Trizeps, kaum beansprucht werden und somit überproportional gering trainiert werden. Dies führt zu einer Disbalance der Muskelbeanspruchung im Oberkörper.

Andere bekannte Fahrräder wie DE 20 2012 000 776 U1 mit einen kombinierten Lenker-Armantrieb verfügen über einen Pleuelantrieb. Dieser Pleuelantrieb hat den Nachteil, dass der Antrieb über einen Totpunkt, am Anfang und am Ende der Armbewegung, verfügt. Die Armkraft des Fahrers während des Armantriebes wird deshalb bei erreichen der beiden Totpunkte vom Pleuelgetriebe aufgenommen, ohne dabei in eine wesentliche Antriebskraft zu bewirken, stattdessen wird die Armkraft vom Pleuelantrieb sozusagen vernichtet.

Ein anderes bekanntes Fahrrad, beschrieben in der Variante A1 der DE 10 2014 015 824.1, verfügt über einen Armantrieb der Zug- und Druckantriebskräfte des Fahrers überträgt, mittels Umlenkrollen 45,44,43,46, die drehbar auf Konsolen 7.5,7.6 gelagert sind. Zudem verfügt die Lenkung über eine Lenkkraftübertragung über ein Kardangelenk 12. Die Konsolen haben einen hohen Windwiderstand und sind schwer. Die Lenkung mittels dem Kardangelenk 12 ist technisch aufwendig, stör- und korrosionsanfällig, schwer und teuer.

Zudem befindet sich bei diesem bekannten Fahrrad die Achse 8.1, um die sich der Lenkerarm 11.1 schwenkt, auf der Lenkachse 37. Damit die Achse 8.1 vom Fahrer nicht zu weit weg ist, um einen antriebskrafteffizienten Schwenkradius des Lenkerarms 11.1 zu gewährleisten, muss sich die Sitzschale 3 des Fahrrades möglichst nahe bei der Achse 8.1, und somit möglichst nahe bei der Lenkachse 37, befinden. Indem sich die Sitzschale 3 so nahe bei der Lenkachse 37 befindet, ist die Neigung, dass sich das Fahrrad samt Fahrer bei einer Vollbremsung übers Vorderrad überschlägt relativ hoch.

Die Aufgabe der Erfindung ist ein Fahrrad oder Heimtrainer gemäß dem Oberbegriff der unabhängigen Ansprüche 1 und 7. Dabei soll der Fahrradfahrer seine Antriebskraft effizient und ergonomisch auf das Fahrrad übertragen können und dabei das Fahrrad sicher fahren können. Auch soll die Technik möglichst einfach, kostengünstig und wartungsarm sein. Das erfindungsgemäße Fahrrad soll eine ansprechendes Aussehen haben.

Die Erfindung löst die Aufgabe, der Eingangs genannten Art, durch den kennzeichnenden Teil der unabhängigen Ansprüche 1 und 7.

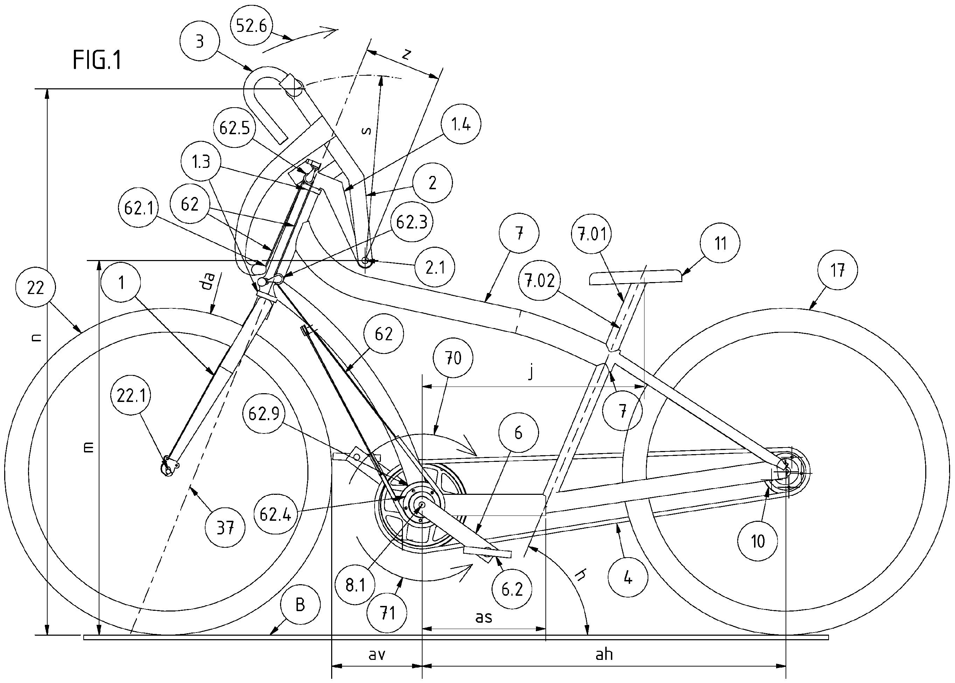

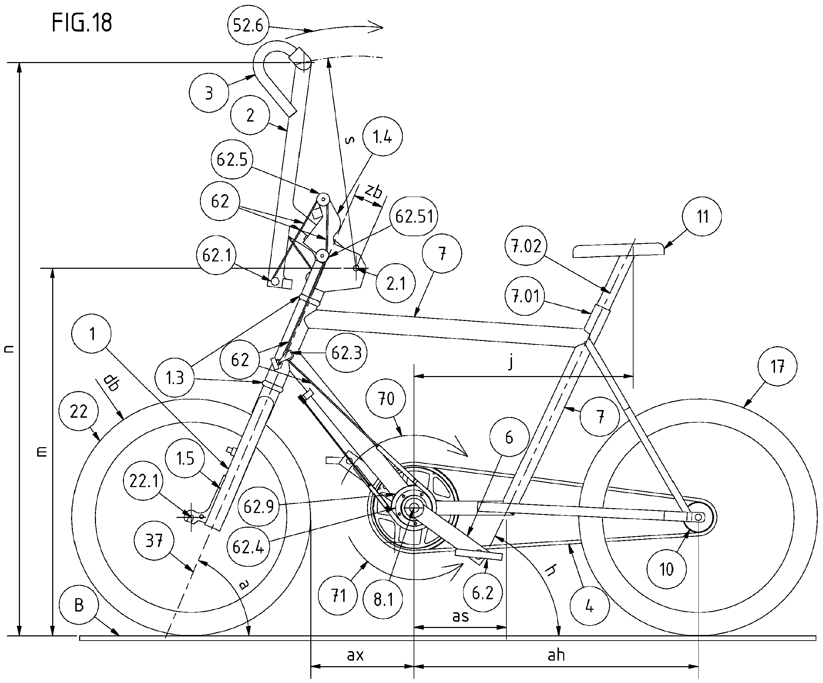

Die erfindungsgemäße Variante A hat einen Fahrradrahmen 7, mit Tretlagerposition zwischen dem Vorderrad 22 und dem Hinterrad 17 und einen normalem Sattel 11 (FIG.1, 18).

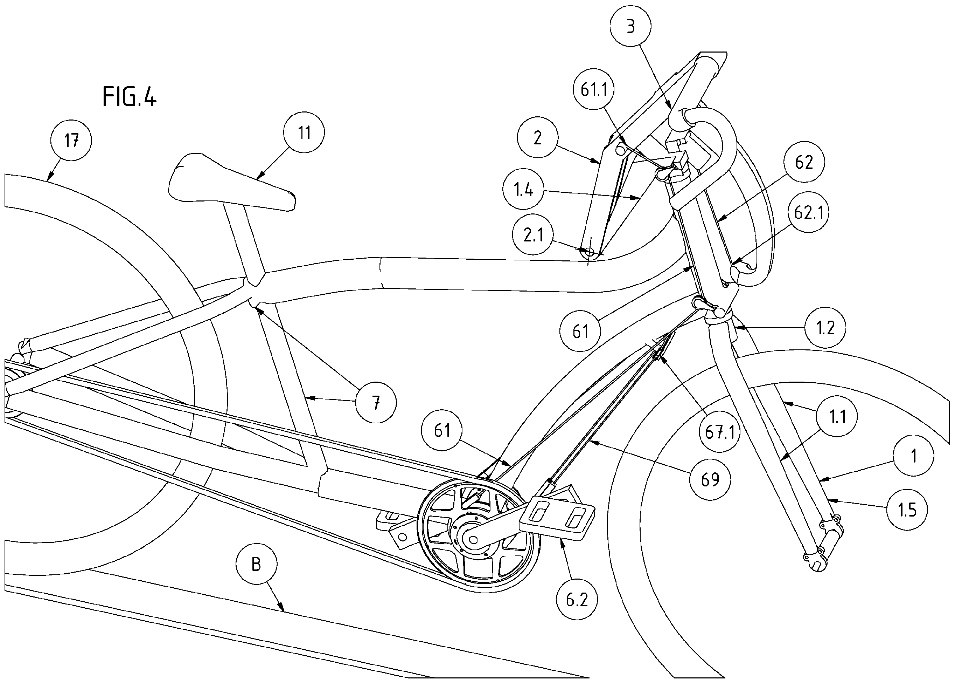

Die Figuren FIG.1, 2, 3, 4, 5, 6, 7 zeigen ein Ausführungsbeispiel AA der erfindungsgemäßen Variante A.

Die Figuren FIG.18, 19, 20, 21, 22, 23, 7 zeigen ein Ausführungsbeispiel AB der erfindungsgemäßen Variante A.

Die Figuren FIG.24, 25, 7 zeigen ein Ausführungsbeispiel AC der erfindungsgemäßen Variante A.

FIG.1 zeigt eine schematische Seitenansicht des Ausführungsbeispiels AA der erfindungsgemäßen Variante A.

FIG.2 zeigt die schematische Vorderansicht des Ausführungsbeispiels AA der erfindungsgemäßen Variante A.

FIG.3 zeigt eine schematische Seitenansicht des Ausführungsbeispiels AA der erfindungsgemäßen Variante A.

FIG.4 zeigt einen Ausschnitt einer schematischen ISO Ansicht des Ausführungsbeispiels AA der erfindungsgemäßen Variante A.

FIG.5 zeigt einen Ausschnitt einer schematischen ISO Ansicht des Ausführungsbeispiels AA der erfindungsgemäßen Variante A.

FIG.6 zeigt einen Ausschnitt einer schematischen ISO Ansicht des Ausführungsbeispiels AA der erfindungsgemäßen Variante A.

FIG.7 zeigt eine schematische Darstellung eines Schnittes durch den Tretlagerbereich und die Kettenritzel 61.9, 62.9, samt deren Freiläufe 61.4, 62.4, des Ausführungsbeispiels AA der erfindungsgemäßen Variante A

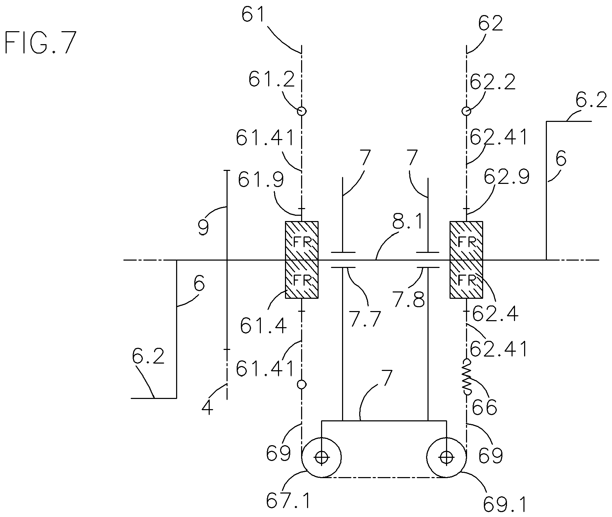

FIG.7 zeigt eine schematische Darstellung eines Schnittes durch den Tretlagerbereich und die Kettenritzel 61.9, 62.9, samt deren Freiläufe 61.4, 62.4, der erfindungsgemäßen Variante A.

FIG.18 zeigt eine schematische Seitenansicht des Ausführungsbeispiels AB der erfindungsgemäßen Variante A.

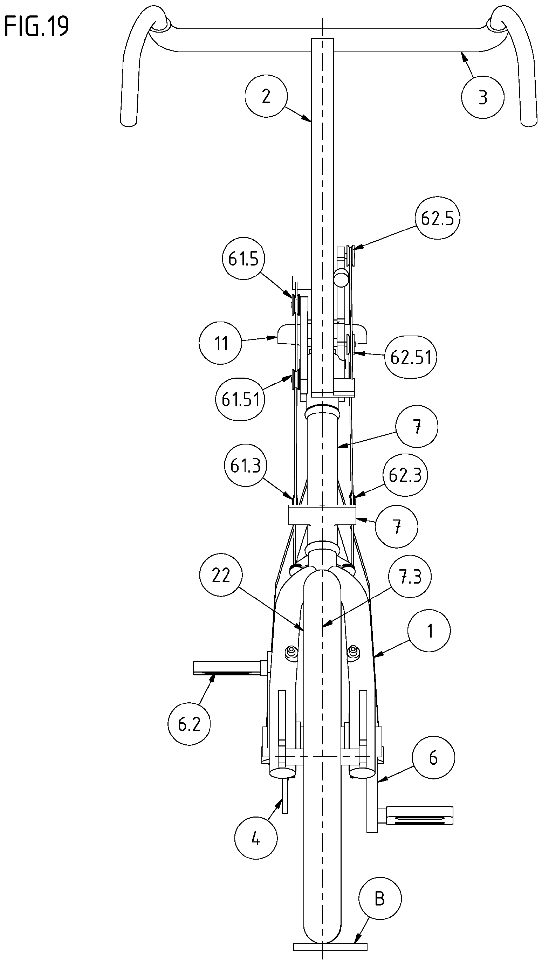

FIG.19 zeigt die schematische Vorderansicht des Ausführungsbeispiels AB der erfindungsgemäßen Variante A.

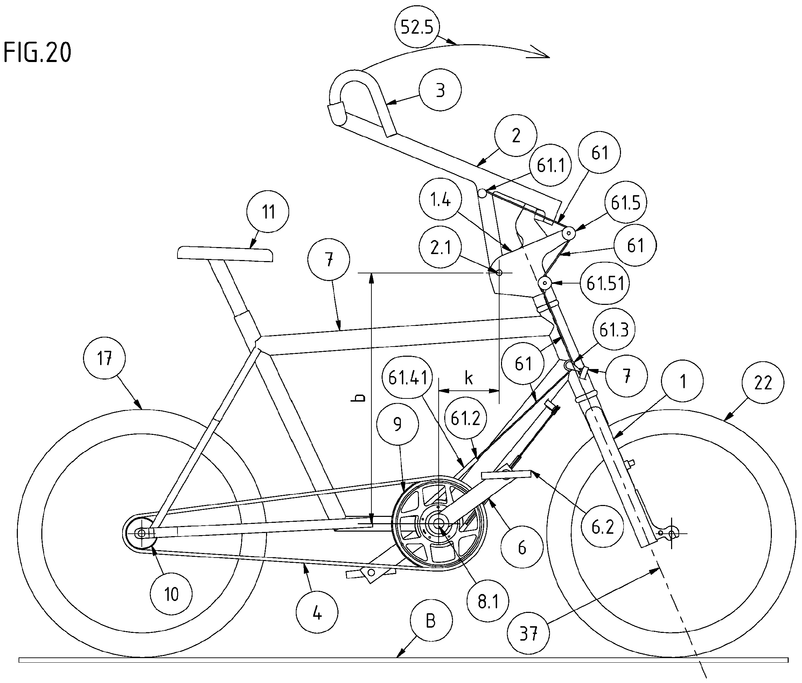

FIG.20 zeigt eine schematische Seitenansicht des Ausführungsbeispiels AB der erfindungsgemäßen Variante A.

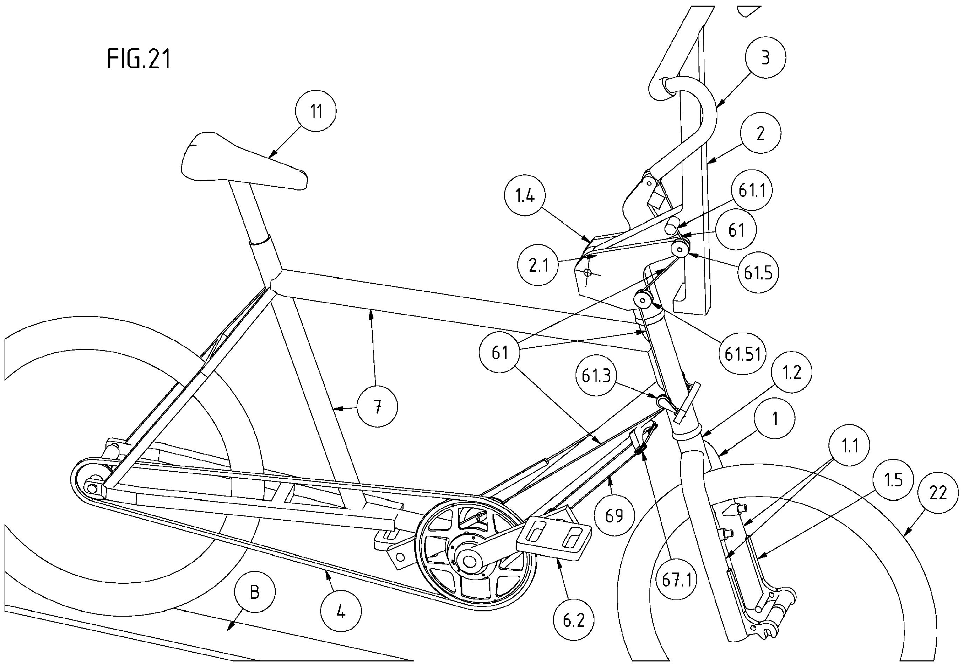

FIG.21 zeigt einen Ausschnitt einer schematischen ISO Ansicht des Ausführungsbeispiels AB der erfindungsgemäßen Variante A.

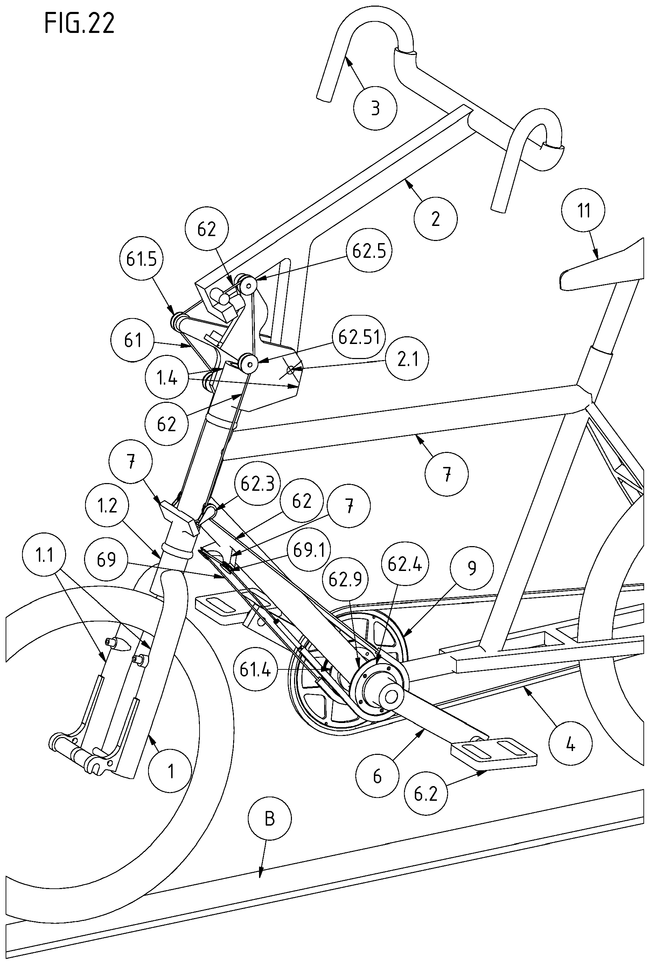

FIG.22 zeigt einen Ausschnitt einer schematischen ISO Ansicht des Ausführungsbeispiels AB der erfindungsgemäßen Variante A.

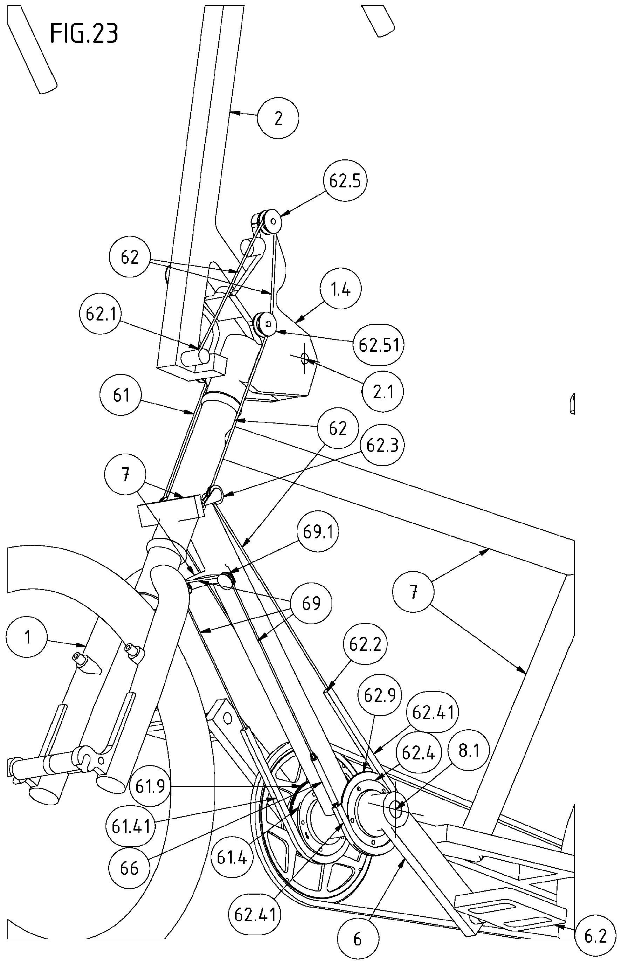

FIG.23 zeigt einen Ausschnitt einer schematischen ISO Ansicht des Ausführungsbeispiels AB der erfindungsgemäßen Variante A.

FIG.7 zeigt eine schematische Darstellung eines Schnittes durch den Tretlagerbereich und die Kettenritzel 61.9, 62.9, samt deren Freiläufe 61.4, 62.4, des Ausführungsbeispiels AB der erfindungsgemäßen Variante A.

Die Gabel 1 des Fahrrades der erfindungsgemäßen Variante A besteht aus Gabelwangen 1.1 und Gabelschaftrohr 1.2. Das Gabelschaftrohr 1.2 ist fest mit den Gabelwangen 1.1 verbunden (FIG.1, 2, 3, 4, 18, 21, 22). Das Gabelschaftrohr 1.2, und somit die Gabel 1, ist über das Lenkkopflager 1.3 im Fahrradrahmen 7 drehbar, um die Lenkachse 37, gelagert (FIG.1, 3, 18, 20, 21).

Im Ausführungsbeispiel AB der erfindungsgemäßen Variante A steht die Lenkachse 37 in einem Winkel a von 55° bis 75°, vorzugsweise von 61° bis 69°, insbesondere von 62° bis 68°, zur Aufstandsfläche B (FIG. 18).

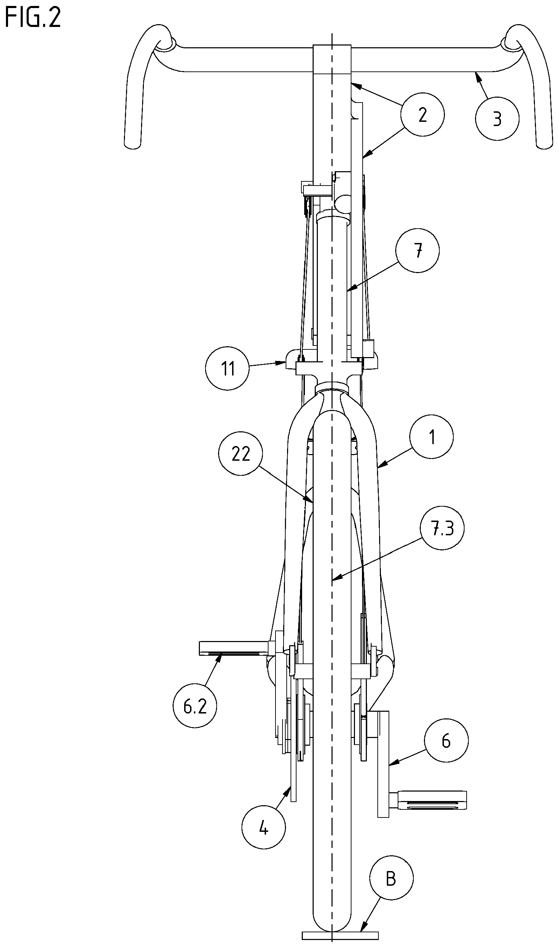

Die Fahrradmittelebene 7.3 der erfindungsgemäßen Variante A (FIG.2, 19) ist die Ebene die sich aufspannt über die Lenkachse 37 und der Mittelachse 7.02 des Sattelrohrs 7.01 (FIG.1, 2, 18, 19).

Ein Vorbau 1.4 ist fest mit dem Gabelschaftrohr 1.2 verbunden. Der Vorbau 1.4 und die Gabel 1 sind die Gabeleinheit 1.5 (FIG.1, 4, 5, 18, 21, 27).

Die Tretkurbeln 6 sind fest mit der Tretkurbelachse 8.1 verschraubt. Diese Tretkurbelachse 8.1 ist über Lager 7.7, 7.8 drehbar im Fahrradrahmen 7 gelagert (FIG.7).

Zum Antrieb des Fahrrades bewegt der Fahrer mit seinen Füßen die Tretkurbeln 6. Auf den Tretkurbeln 6 sind die Pedale 6.2 drehbar gelagert. Aus Fahrersicht, rechts vom Fahrradrahmen 7 verläuft die Antriebskette 4. Die Antriebskette 4 treibt über das Antriebskettenrad 9 und über das Antriebsritzel 10 das Hinterrad 17 an (FIG.1, 18).

Im Ausführungsbeispiel AA der erfindungsgemäßen Variante A beträgt der Vorderraddurchmesser da von 500mm bis 780mm, vorzugsweise von 620mm bis 720mm, insbesondere von 640mm bis 700mm (FIG.1).

Im Ausführungsbeispiel AB der erfindungsgemäßen Variante A beträgt der Vorderraddurchmesser db von 300mm bis 660mm, vorzugsweise von 440mm bis 590mm, insbesondere von 470mm bis 560mm (FIG.18).

FIG.1, 2, 4, 6, 18, 19, 21, 23, 24, 27 zeigen das Fahrrad der erfindungsgemäßen Variante A mit Armhebel 2 in der jeweils vordersten Stellung seiner Schwenkbewegung.

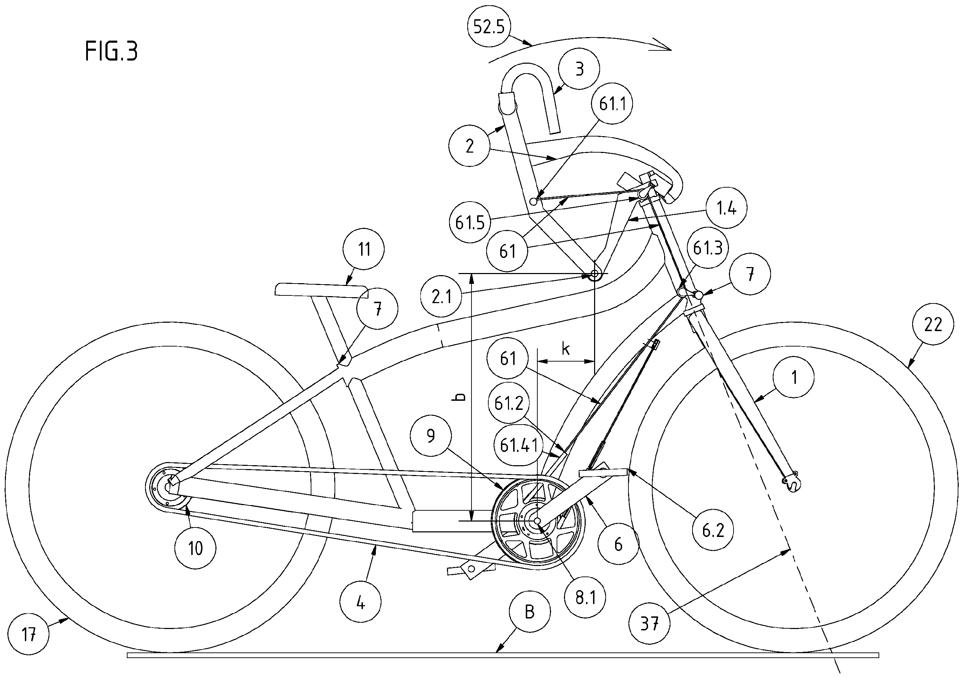

FIG.3, 5, 20, 22, 25, 26 zeigen das Fahrrad der erfindungsgemäßen Variante A mit dem Armhebel 2 in der hintersten Stellung seiner Schwenkbewegung.

Bei der erfindungsgemäßen Variante A ist ein Armhebel 2, um die Achse 2.1, schwenkbar im Vorbau 1.4, der Gabeleinheit 1.5, gelagert. Die Achse 2.1 befindet sich, in Fahrtrichtung gesehen, hinter der Lenkachse 37.

Im Ausführungsbeispiel AA der erfindungsgemäßen Variante A hat die Achse 2.1 einen Abstand z zur Lenkachse 37. Der Abstand z ist zwischen 30mm und 300 mm, vorzugsweise zwischen 50mm und 250 mm, insbesondere zwischen 110mm und 190 mm (Fig.1).

Im Ausführungsbeispiel AB der erfindungsgemäßen Variante A hat die Achse 2.1 einen Abstand zb zur Lenkachse 37. Der Abstand zb ist zwischen 0mm und 150 mm, vorzugsweise zwischen 20mm und 130 mm, insbesondere zwischen 60mm und 110 mm (Fig.18).

Die Achse 2.1 hat einen Abstand m zur Aufstandsfläche B (FIG.1, 18).

Ein Lenker 3 ist fest mit dem Armhebel 2 verbunden.

Am Lenker 3 kann sich der Fahrer mit beiden Händen festhalten und auch den Armhebel 2 bewegen. Die Mittelachse des Lenkers 3 hat einen Abstand n zur Aufstandsfläche B (FIG.1, 18)

Der Lenker 3 macht bei seiner Schwenkbewegung einen Schwenkradius s um die Achse 2.1 (FIG.1, 18). Der Schwenkradius s ist der Abstand der Achse 2.1 zur Mittelachse des Lenkers 3.

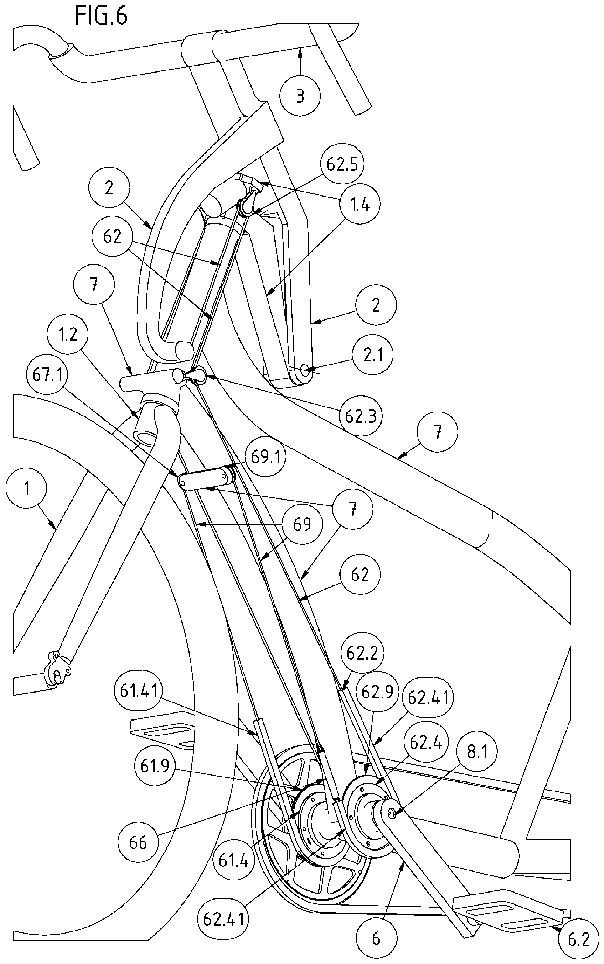

Die erfindungsgemäßen Variante A verfügt über einen Seilantrieb mit Kettenritzel 61.9, 62.9, Freiläufen 61.4, 62.4, Umlenkrollen 67.1, 69.1, Schraubenfeder 66, Seil 69 und Ketten 61.41, 62.41 (FIG.6, 21, 23, 7).

FIG.7 zeigt eine schematische Darstellung eines Schnittes durch den Tretlagerbereich und die Kettenritzel 61.9, 62.9, samt deren Freiläufe 61.4, 62.4, der erfindungsgemäßen Varianten A.

Die Tretkurbelachse 8.1 ist über Lager 7.7, 7.8 drehbar im Fahrradrahmen 7 gelagert (FIG.7).

Die erfindungsgemäßen Varianten A, A1, A3, verfügen über eine Zugdruckantriebskraftübertragungsvorrichtung. Die Zugdruckantriebskraftübertragungsvorrichtung hat unter anderem Seile 61, 62, Ketten 61.41, 62.41, Kettenritzel 61.9, 62.9 und Freiläufe 61.4, 62.4. Mit dem Seil 62, Kettenritzel 62.9, Kette 62.41 und Freilauf 62.4 werden Kräfte übertragen bei denen der Fahrer, bei seiner Armantriebsbewegung, mit einem seinen Armen den Lenker 3, 53 von sich weg drückt, also Druckantriebskräfte.

Mit dem Seil 61, Kettenritzel 61.9, Kette 61.41 und Freilauf 61.4 werden Kräfte übertragen bei denen der Fahrer, bei seiner Armantriebsbewegung, mit seiner Arme den Lenker 3, 53 zu sich hin zieht, also Zugantriebskräfte.

In der erfindungsgemäßen Variante A verfügt der Armhebel 2 über Seile 61,62. Die Umlenkrollen 61.3,62.3 sind drehbar in Rollenböcken gelagert und diese Rollenböcke sind am Fahrradrahmen 7 befestigt (FIG.1, 18, 3, 20, 6, 23).

Im Ausführungsbeispiel AA der erfindungsgemäßen Variante A sind die Umlenkrollen 61.5,62.5 drehbar in Rollenböcken gelagert und diese Rollenböcke sind auf dem Vorbau 1.4 der Gabel 1 gelagert (FIG.1, 3).

Im Ausführungsbeispiel AB der erfindungsgemäßen Variante A, verfügen die Umlenkrollen 61.5,62.5 über keine Rollenböcke. Stattdessen sind im Ausführungsbeispiel AB der erfindungsgemäßen Variante A die Umlenkrollen 61.5,62.5 drehbar auf dem Vorbau 1.4 der Gabel 1 gelagert (FIG. 18, 20). Zudem verfügt das Fahrrad im Ausführungsbeispiel AB der erfindungsgemäßen Variante A über zusätzliche Umlenkrollen 61.51,62.51, welche drehbar auf dem Vorbau 1.4 der Gabel 1 gelagert sind (FIG. 18, 20).

In der erfindungsgemäßen Variante A ist das Seil 61 an einem Ende am Armhebel 2 festgebunden und das Seil 62 ist an einem Ende am Armhebel 2 festgebunden.

Im Ausführungsbeispiel AA der erfindungsgemäßen Variante A läuft das Seil 61 über die Umlenkrollen 61.3,61.5 und das Seil 62 läuft über die Umlenkrollen 62.3,62.5.

Im Ausführungsbeispiel AB der erfindungsgemäßen Variante A läuft das Seil 61 über die Umlenkrollen 61.3, 61.51, 61.5 und das Seil 62 läuft über die Umlenkrollen 62.3, 62.51, 62.5.

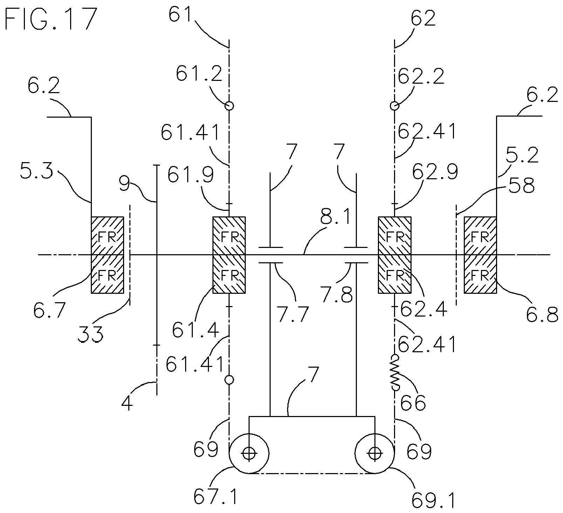

In den erfindungsgemäßen Varianten A, A1, B, B1, sind die Kettenritzel 61.9, 62.9 jeweils fest mit dem äußeren Ring RA von jeweils einem Freilauf 61.4, 62.4 verbunden (FIG.7, 17). Ein Freilauf besteht aus zwei Ringen RA und RI die drehbar zueinander gelagert sind. Jeder der Freiläufe 61.4,62.4 hat jeweils einen inneren Ring RI und einen äußeren Ring RA. Wird Ring RA festgehalten, so ist der jeweils andere Ring RI frei in eine Richtung drehbar, jedoch verhindert ein Sperrmechanismus, dass der Ring RI nicht in die entgegen gesetzte Richtung, die so genannte Sperrrichtung, drehbar ist. Ein solcher Sperrmechanismus ist vorzugsweise wenigstens eine Sperrklinke oder wenigstens ein Klemmkeil oder wenigstens eine Klemmrolle. Diese Sperrklinken oder Klemmkeile oder Klemmrollen wirken nur in einer Drehrichtung der beiden Ringe RA und RI zueinander, in der entgegengesetzten Drehrichtung der beiden Ringe RA und RI zueinander geben sie die Sperrung frei. Der jeweils innere Ring RI der Freiläufe 61.4,62.4 ist jeweils fest mit der Tretkurbelachse 8.1 des erfindungsgemäßen Fahrrades verbunden. Die Tretkurbelachse 8.1 ist über Lager 7.7,7.8 drehbar im Fahrradrahmen 7 gelagert (FIG. 7, 17).

Die jeweils äußeren Ringe RA der Freiläufe 61.4,62.4 sind jeweils relativ zu ihrem inneren Ring RI und somit relativ zur Tretkurbelachse 8.1 im Uhrzeigersinn 70, in FIG.1, 18 gesehen, frei drehbar, jedoch verhindern Sperrklinken der Freiläufe 61.4,62.4 dass der jeweils äußere Ring RA gegen den Uhrzeigersinn 71, in FIG. 1, 18 gesehen, relativ zum inneren Ring drehbar ist. Wenn also Kettenritzel 61.9,62.9 gegen den Uhrzeigersinn 71, in FIG.1, 18 gesehen, angetrieben werden, so rasten die Sperrklingen des jeweiligen Freilaufes 61.4,62.4, der jeweilig gegen den Uhrzeigersinn 71, in FIG.1, 18 gesehen, angetriebenen Kettenritzel 61.9,62.9, ein und die Tretkurbelachse 8.1 wird mit gedreht.

In der erfindungsgemäßen Variante A ist das Seil 62 an seinem einen Ende 62.1 am Armhebel 2 und an seinem anderen Ende 62.2 an einer Kette 62.41 festgebunden (FIG.1, 4, 6, 7, 17, 18, 23). Das Seil 61 ist an seinem einen Ende 61.1 am Armhebel 2 und an seinem anderen Ende 61.2 an einer Kette 61.41 festgebunden (FIG.3, 4, 7, 17, 20, 21).

Die Kette 61.41 umschlingt das Kettenritzel 61.9 (FIG.6, 23).

Die Kette 62.41 umschlingt das Kettenritzel 62.9 (FIG.6, 23).

Zudem besitzt die erfindungsgemäßen Variante A eine Schraubenfeder 66. Außerdem besitzt die erfindungsgemäßen Variante A über zwei zusätzliche Umlenkrollen 67.1,69.1 die drehbar auf dem Fahrradrahmen 7 gelagert sind (FIG.6, 7, 17, 23). Die Schraubenfeder 66 ist an ihrem einen Ende an die Kette 62.41 befestigt und an ihrem anderen Ende an das Seil 69. Das Seil 69 läuft über die Umlenkrollen 67.1,69.1 und ist an seinem einen Ende an ein Ende der Kette 61.41 befestigt.

Die Schraubenfeder 66 ist gespannt. Durch die Federspannung der Schraubenfeder 66 werden die Seile 61, 62, 69 und die Ketten 61.41, 62.41, gespannt.

Das Seil 69 und die Schraubenfeder 66 bewirken, dass sich wenn sich das Kettenritzel 61.9 gegen den Uhrzeigersinn 71, in FIG.1, 18 gesehen, dreht, sich das Kettenritzel 62.9 im Uhrzeigersinn 70, in FIG.1, 18 gesehen, dreht. Das Seil 69 und die Schraubenfeder 66 bewirkt, dass sich wenn sich das Kettenritzel 62.9 gegen den Uhrzeigersinn 71, in FIG.1, 18 gesehen, dreht, sich das Kettenritzel 61.9 im Uhrzeigersinn 70, in FIG.1, 18 gesehen, dreht. Die Freiläufe 61.4, 62.4, ermöglichen es dem Fahrer das Fahrrad der erfindungsgemäßen Variante A entweder nur mit den Tretkurbeln 6 anzutreiben und gleichzeitig den Armhebel 2 stillstehen zu lassen oder mit dem Armhebel 2 und den Tretkurbeln 6 gleichzeitig anzutreiben.

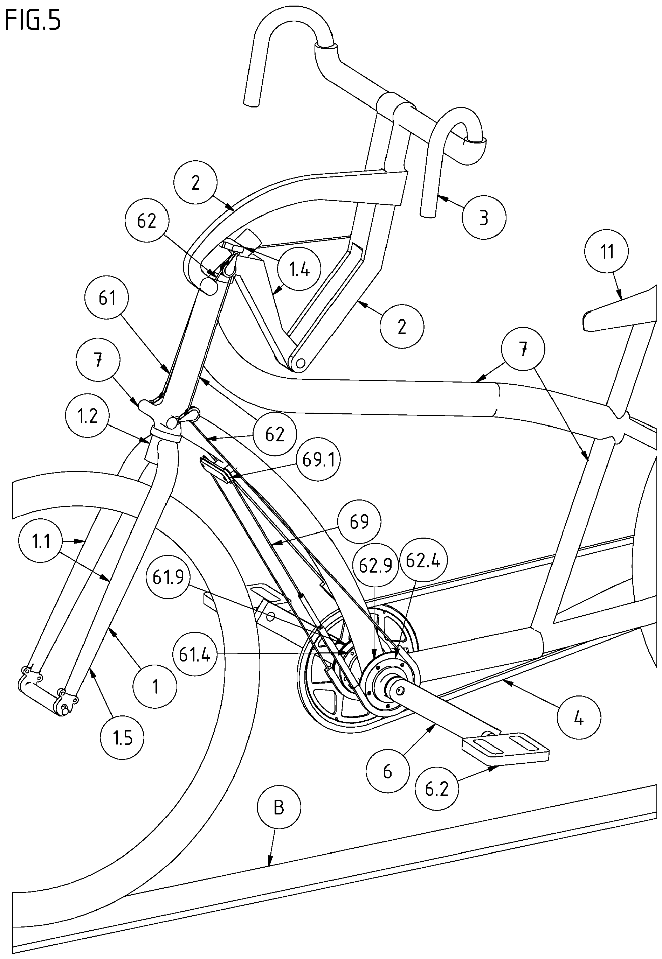

Der Freilauf 61.4 ist so angeordnet (FIG.5, 6, 23, 7), dass sobald der Lenker 3 mit dem Armhebel 2, um die Achse 2.1 im Uhrzeigersinn 52.6, aus der Sicht in FIG. 1, 18 gesehen, geschwenkt wird, zieht er das Seil 61 und somit die Kette 61.41 und die Kette 61.41 dreht somit das Kettenritzel 61.9 gegen den Uhrzeigersinn 71, aus der Sicht in FIG. 1, 18 gesehen, und der Freilauf 61.4 rastet ein und dreht die Tretkurbelachse 8.1 und somit das Antriebskettenrad 9, die Antriebskette 4, das Antriebsritzel 10 und das Hinterrad 17 in Antriebsrichtung.

Der Freilauf 62.4 ist so angeordnet (FIG.1, 5, 18, 22), dass sobald der Lenker 3 mit dem Armhebel 2, um die Achse 2.1 im Uhrzeigersinn 52.5, aus der Sicht in FIG.3, 20 gesehen, geschwenkt wird, zieht Armhebel 2 das Seil 62 und zieht somit die Kette 62.41 und die Kette 62.41 dreht somit das Kettenritzel 62.9 gegen den Uhrzeigersinn 71, aus der Sicht in FIG.1, 18 gesehen, und der Freilauf 62.4 rastet ein und dreht die Tretkurbelachse 8.1 und somit das Antriebskettenrad 9, die Antriebskette 4, das Antriebsritzel 10 und das Hinterrad 17 in Antriebsrichtung.

Der Vorteil der erfindungsgemäßen Varianten A, A1 ist, dass sie nur zwei Freiläufe benötigen und somit einen geringen mechanischen Aufwand darstellt. Weniger Freiläufe bedeuten weniger Gewicht, weniger Reibungsverluste im Antriebsstrang und geringere Herstellungskosten. Die Armantriebseinheit des erfindungsgemäßen Fahrrades mit ihren Seilen 61, 62 und ihren Kettenritzeln 61.9, 62.9, und Freiläufen 61.4, 62.4 ist eine einfache Konstruktion. Somit ist die Armantriebseinheit des erfindungsgemäßen Fahrrads deutlich einfacher, kostengünstiger, robuster und wartungsärmer als die Pleuelantriebe anderer bekannte Fahrräder wie DE 20 2012 000 776 U1. Der Pleuelantrieb des Armantriebs der DE 20 2012 000 776 U1 hat viele aufwendig herzustellende Teile, die teuer sind und deren Mechanik störanfällig ist.

Ein weiterer Vorteil der erfindungsgemäßen Varianten ist, das der Fahrer sowohl in Druckrichtung des Lenkers 3, also im Uhrzeigersinn 52.5 aus der Sicht in FIG.3, 10, 20 gesehen, als auch in Zugrichtung des Lenkers 3, also im Uhrzeigersinn 52.6 aus der Sicht in FIG.1, 8, 18 gesehen, seine Antriebskraft für den Vortrieb des erfindungsgemäßen Fahrrades nutzen kann.

Somit werden nahezu alle Muskelgruppen des Oberkörpers zum Antrieb benutzt und der Oberkörper gleichmäßig trainiert.

Zudem hat der Antrieb des erfindungsgemäßen Fahrrades keinen Totpunkt, am Anfang und am Ende der Armantriebsbewegung. Die Armantriebskraft wird beim erfindungsgemäßen Fahrrad auch bei der Anfangs- und Endbewegung des Lenkers in volle Antriebskraft umgesetzt, ohne Verluste durch einen etwaigen Totpunkt, wie zum in der DE 20 2012 000 776 U1. Das bekannte Fahrrad der DE 20 2012 000 776 U1 ist einspuriges Liegerad mit Tretlager vor der Lenkachse, ein sogenannter Kurzlieger. Es hat einen kombiniertem Lenker-Armantrieb der die Antriebskräfte über einen Pleuelantrieb realisiert, wobei der Pleuelantrieb einen Totpunkt hat, der beim Antreiben mit den Armen überwunden werden muss und als störend empfunden wird.

Hingegen kann beim erfindungsgemäßen Fahrrad der Fahrer die ganze Hubbewegung über seine Armkraft einsetzen, ohne auf einen Totpunkt achten zu müssen, bei welchem er die Antriebskraft reduzieren muss, um einen runden Antrieb des Pleuelantriebes zu gewährleisten.

Der Fahrer lenkt das Fahrrad der erfindungsgemäßen Variante A über den Lenker 3. Die Lenkkraft wird vom Lenker 3 über den Armhebel 2, über die Achse 2.1, über den Vorbau 1.4 der Gabel 1 auf das Vorderrad 22 übertragen. Diese Lenkkraftübertragung erfolgt somit nahezu direkt vom Lenker 3 zur Gabel 1.

Bei einer Schwenkbewegung des Lenkers 3 nach links schwenkt die Gabel 1 nach links, bei einer Schwenkbewegung des Lenkers 3 nach rechts schwenkt die Gabel 1 nach rechts.

In den Ausführungsbeispielen AA, AB, der erfindungsgemäßen Variante A und bei den erfindungsgemäßen Varianten A1, B, ist der Lenker 3 ein Rennradlenker (FIG. 1, 8, 18).

Ein Vorteil der erfindungsgemäßen Varianten A ist, dass der Hubwinkel des Armhebels 2, um die Achse 2.1, bis zu 150° betragen kann. Hingegen hat bei der Lenkung, mittels eines Kardangelenkes, beispielsweise des bekannten Fahrrades der DE 20 2012 000 776 U1, das Kardangelenk 54 einen maximalen Beugewinkel von 25° je Beugeseite. Dieser maximale Beugewinkel begrenzt die Hubbewegung des Hüllrohres 53, und somit des Lenkers 52, auf einen maximalen Hubwinkel von nur 50°. Durch diesen größeren Hubwinkel des Armhebels 2 haben die erfindungsgemäßen Varianten A, A1, einen größeren möglichen Armarbeitshub als der Lenker 52 des bekannten Fahrrades der DE 20 2012 000 776 U1.

Ein Vorteil der erfindungsgemäßen Variante A ist, dass sich die Achse 2.1, um den Abstand z, za, hinter der Lenkachse 37 befindet. Durch den Abstand z, za, kann ein kleiner Abstand m, bei gleichzeitig großem Schwenkradius s, realisiert werden (FIG. 1, 8, 15, 18). Durch den großen Schwenkradius s ergibt sich für den Fahrer des erfindungsgemäßen Fahrrades eine flachere Armantriebsbewegung als bei einem kleinen Schwenkradius s. Zudem kommt die Achse 2.1 näher Richtung Sattel 11. Der größere Schwenkradius s, und somit die flachere Armantriebsbewegung, und die Achse 2.1 näher Richtung Sattel 11, ist besser geeignet für einen kraftvolle Armantriebsbewegung des Fahrers des erfindungsgemäßen Fahrrades. Indem beim erfindungsgemäßen Fahrrad die Achse 2.1 nicht auf der Lenkachse sitzen muss, wie in der Patentschrift mit der internationalen Anmeldenummer PCT/EP2006/003369, kann beim erfindungsgemäßen Fahrrad die Position der Achse 2.1 relativ frei gewählt werden. Somit kann beim erfindungsgemäßen Fahrrad der Schwenkradius s und seine Schwenkachse die Achse 2.1 so gewählt werden, das diese optimal für eine kraftvolle und ergonomische Armantriebsbewegung des Fahrers des erfindungsgemäßen Fahrrades ist.

Das erfindungsgemäße Fahrrad verfügt über eine Fahrradgeometrie die einfach und sicher zu fahren ist. Das erfindungsgemäße Fahrrad ist viel einfacher und sicherer zu fahren als ein Kurzlieger, also ein einspuriges Liegerad mit Tretlager vor der Lenkachse.

Insbesondere bei den erfindungsgemäße Varianten A3, und dem Fahrrad des Ausführungsbeispiels AC der erfindungsgemäßen Variante A, ist der Abstand vom Sattel zur Aufstandsfläche sogar kleiner als bei herkömmlichen Fahrrädern. Dadurch kommt man beim Anhalten des Fahrrades der erfindungsgemäße Variante A3, und dem Fahrrad des Ausführungsbeispiels AC der erfindungsgemäßen Variante A, schnell mit den Füßen auf den Boden. Fahrräder, oder auch Sesselräder, mit niedriger Sattelhöhe sind so einfach und sicher zu fahren, dass sie deshalb oft auch von Senioren benutzt werden.

Zudem kann, bei der erfindungsgemäßen Variante A, durch den Abstand z, za, ein ausreichend großer Schwenkradius s erzielt werden, ohne dass dabei der Abstand n zu groß wird. Somit kann beim erfindungsgemäßen Fahrrad der Lenker 3 relativ niedrig über der Aufstandsfläche B (FIG.1, 8, 15, 18) sein, was optisch viel ansprechender ist als ein Lenker der sich sehr hoch über der Aufstandsfläche befindet. Auch ist ein Fahrrad, bei dem sich der Lenker relativ niedrig über der Aufstandsfläche B befindet, einfacher und sicherer zu fahren, als bei Lenkern die sich höher über der Aufstandsfläche B befinden.

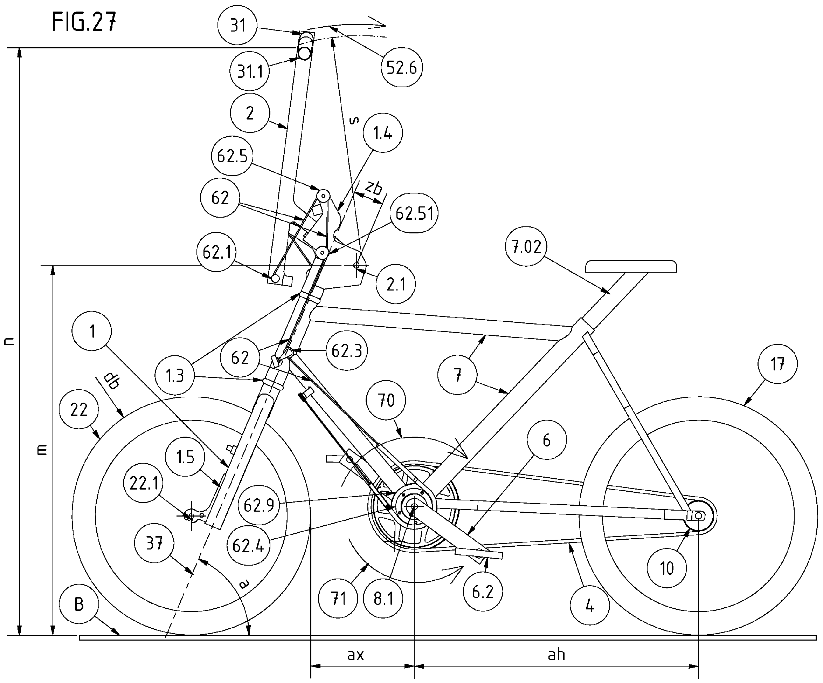

In den erfindungsgemäßen Varianten AB, E beträgt der Schwenkradius s zwischen 300 mm und 640 mm, vorzugsweise zwischen 370 mm und 570 mm, insbesondere zwischen 400 mm und 540 mm (Fig.18, 27).

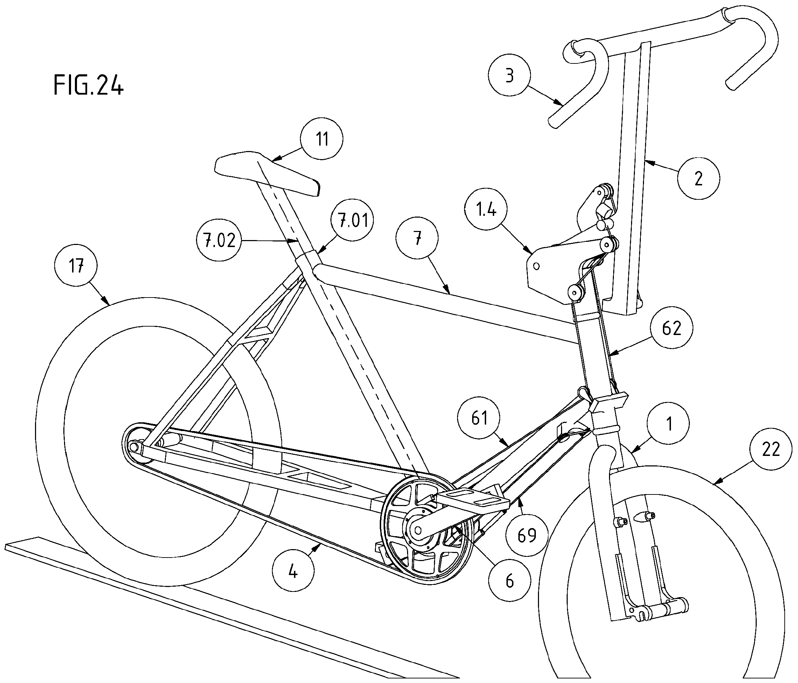

Das Ausführungsbeispiel AC der erfindungsgemäßen Variante A entspricht dem Ausführungsbeispiel AB der erfindungsgemäßen Variante A. Jedoch hat im Ausführungsbeispiel AC, der erfindungsgemäßen Variante A, der Rahmen 7 ein Sattelrohr 7.01 das in etwa direkt zum Tretlagerrohr verläuft. FIG.24 zeigt einen Ausschnitt einer schematischen ISO Ansicht des Ausführungsbeispiels AC der erfindungsgemäßen Variante A.

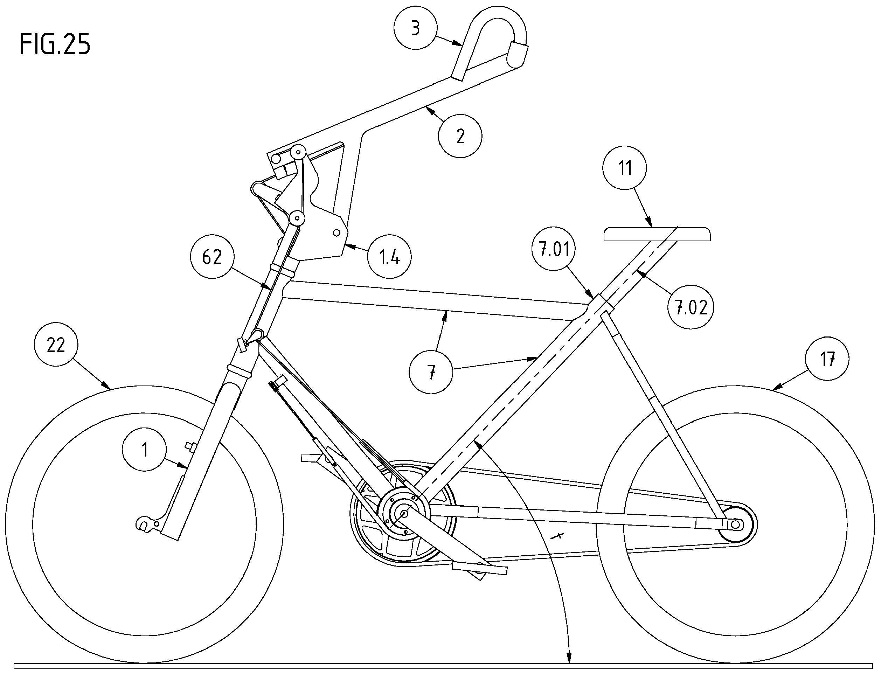

FIG.25 zeigt eine schematische Seitenansicht des Ausführungsbeispiels AC der erfindungsgemäßen Variante A.

Im Ausführungsbeispiel AC der erfindungsgemäßen Variante A beträgt der erfindungsgemäße Sattelrohrwinkel t zwischen 75° und 33°, vorzugsweise zwischen 55° und 35°, insbesondere zwischen 50° und 40°.

Durch den flachen Sattelrohrwinkel t kommt man beim Anhalten des Fahrrades des Ausführungsbeispiels AC der erfindungsgemäßen Variante A schnell mit den Füßen auf den Boden. Diese Eigenschaft macht das Fahren einfacher und sicherer.

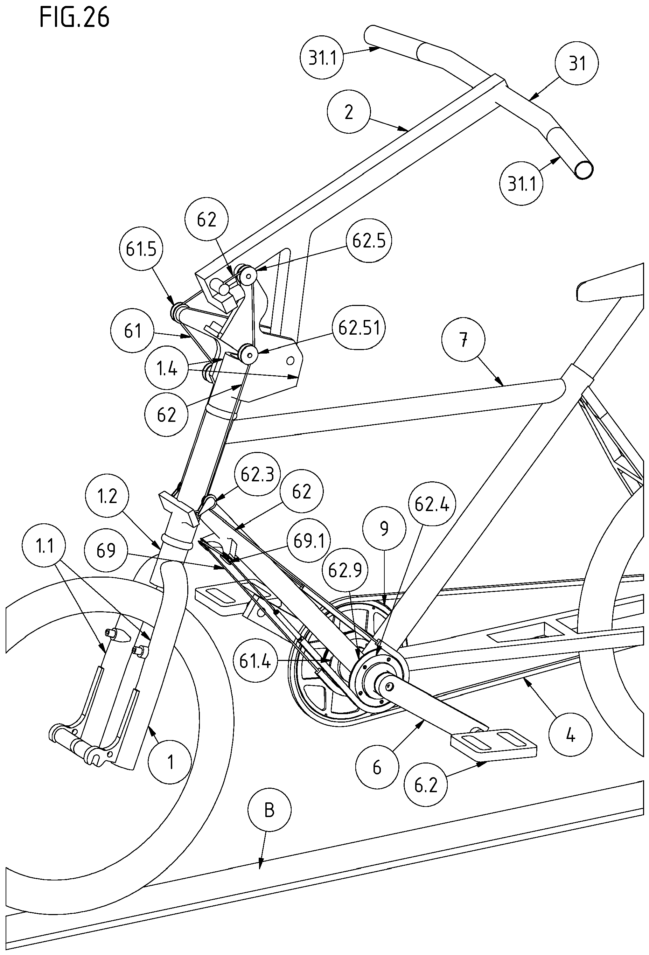

FIG.26, 27 zeigen auch das Ausführungsbeispiel AC der erfindungsgemäßen Variante A, jedoch mit einem Lenker 31 der erfindungsgemäßen Variante E.

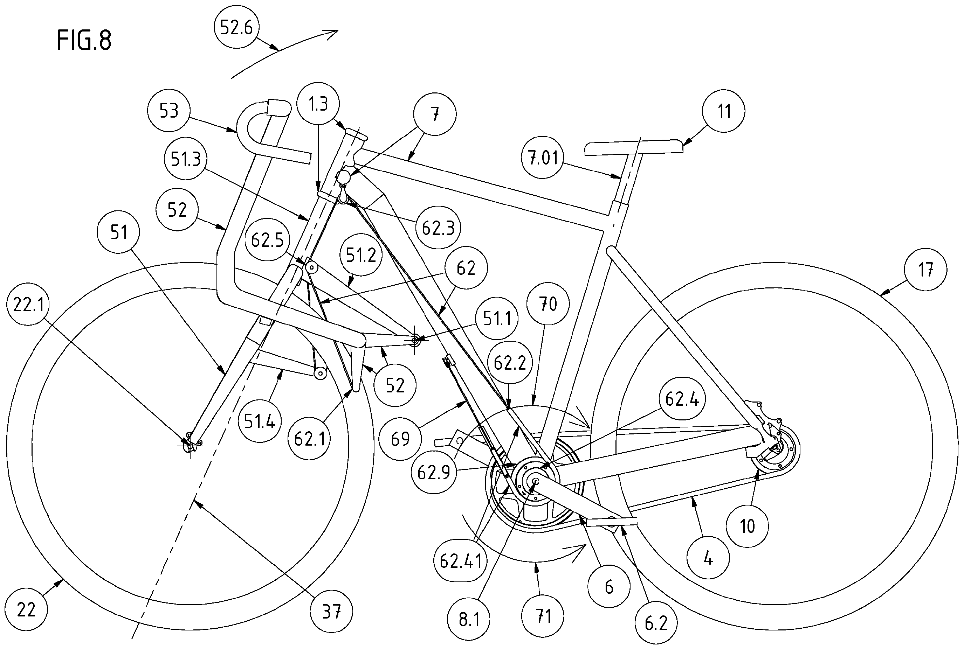

Die erfindungsgemäße Varianten A1 (FIG.8) entspricht der erfindungsgemäßen Variante A. Jedoch ist in der erfindungsgemäßen Variante A1 der Armhebel 52 schwenkbar im Arm 51.2 der Gabeleinheit 51.5 gelagert. Zudem ist in erfindungsgemäßen Varianten A1 der Lenker 53 fest mit dem Armhebel 52 verbunden.

FIG.8 zeigt eine schematische Seitenansicht der erfindungsgemäßen Varianten A1.

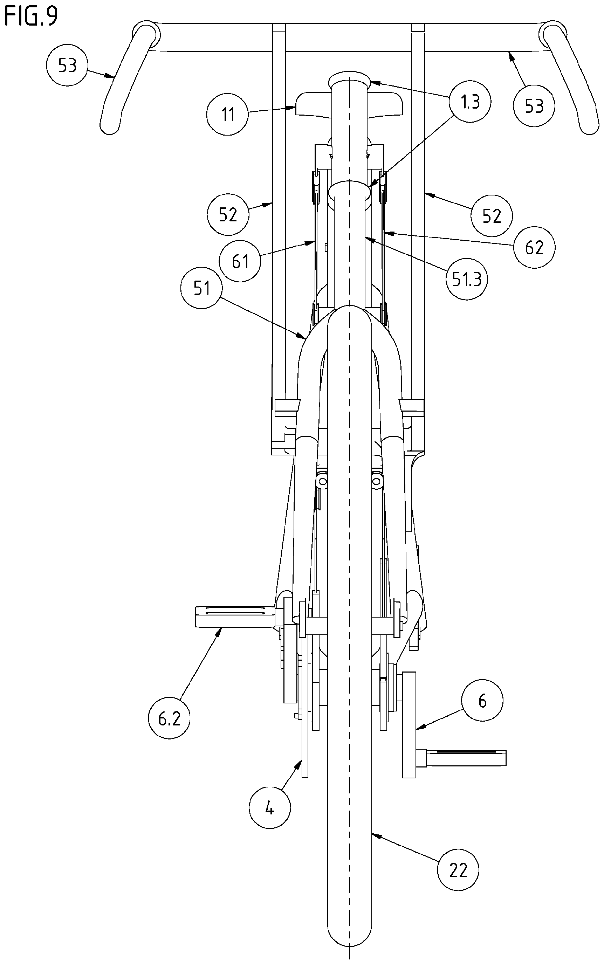

FIG.9 zeigt die schematische Vorderansicht der erfindungsgemäßen Varianten A1.

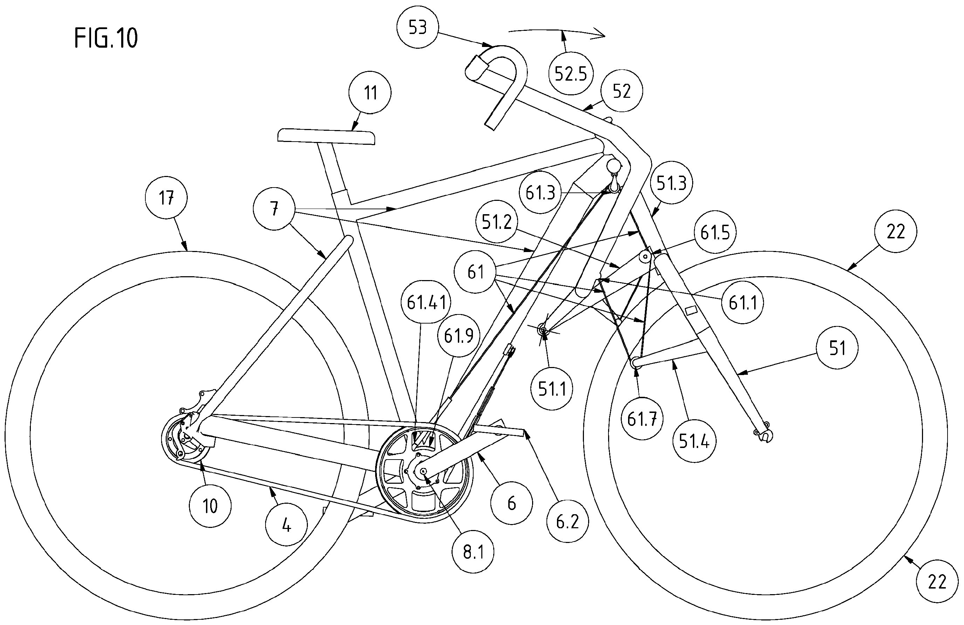

FIG.10 zeigt eine schematische Seitenansicht der erfindungsgemäßen Varianten A1.

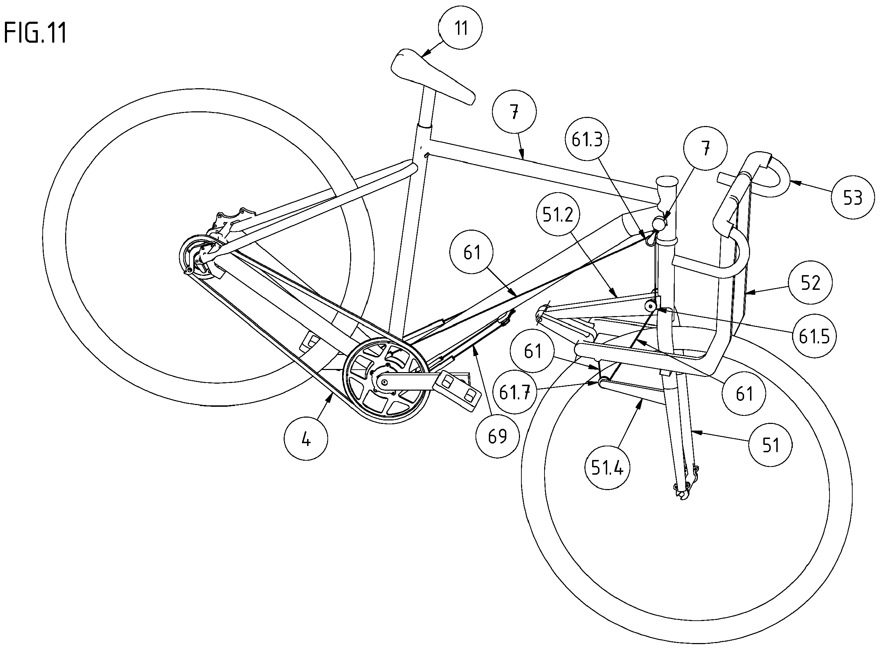

FIG.11 zeigt eine schematische ISO Ansicht der erfindungsgemäßen Varianten A1.

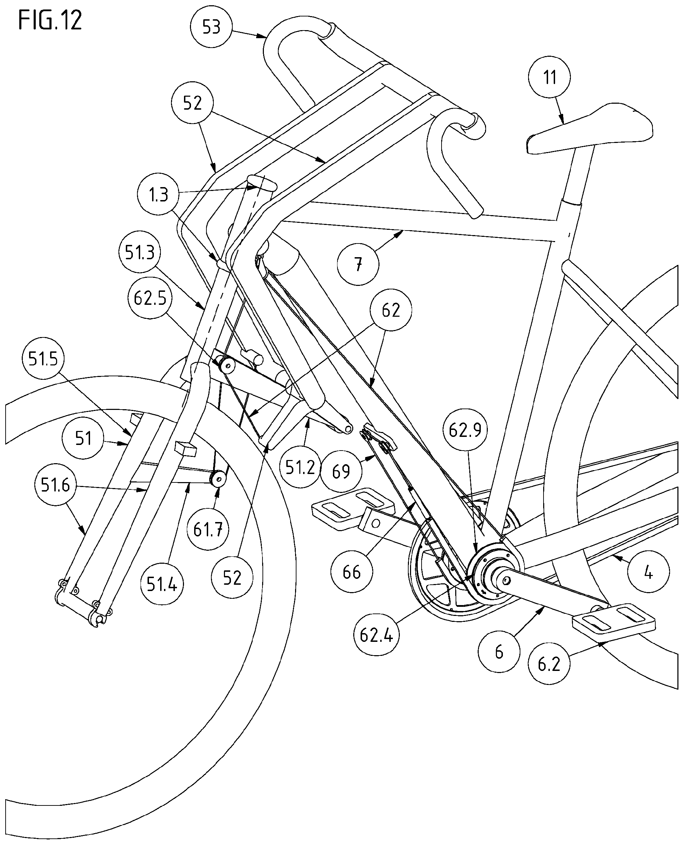

FIG.12 zeigt einen Ausschnitt einer schematische ISO Ansicht der erfindungsgemäßen Varianten A1.

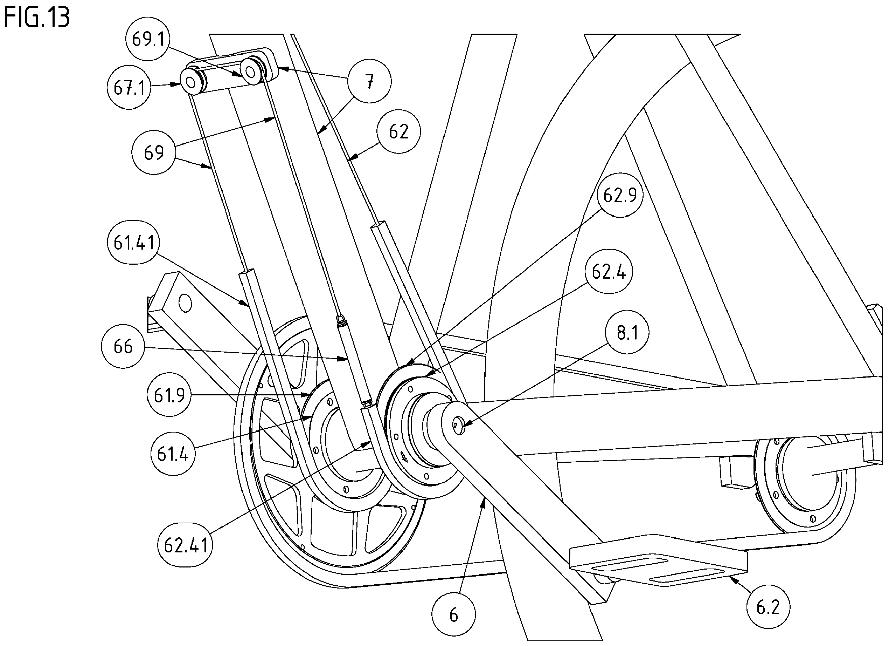

FIG.13 zeigt einen Ausschnitt einer schematische ISO Ansicht der erfindungsgemäßen Varianten A1.

Die Gabel 51 des Fahrrades der erfindungsgemäßen Varianten A1 besteht aus Gabelwangen 51.6 und Gabelschaftrohr 51.3. Das Gabelschaftrohr 51.3 ist fest mit den Gabelwangen 51.6 verbunden (FIG.8, 9, 12). Das Gabelschaftrohr 51.3, und somit die Gabel 51, ist über das Lenkkopflager 1.3 im Fahrradrahmen 7 drehbar, um die Lenkachse 37, gelagert (FIG.8, 12).

Zur Gabeleinheit 51.5 gehören die Gabel 51 und die Arme 51.2,51.4. Die Arme 51.2,51.4 sind fest mit der Gabel 51 verbunden.

Der Armhebel 52 ist, um die Achse 51.1, schwenkbar im Arm 51.2 der Gabeleinheit 51.5 gelagert.

Am Lenker 53 kann sich der Fahrer mit beiden Händen festhalten und auch den Armhebel 52 bewegen.

Der Fahrer lenkt das Fahrrad der erfindungsgemäße Varianten A1 über den Lenker 53. Die Lenkkraft wird vom Lenker 53 über den Armhebel 52, über die Achse 51.1, über den Arm 51.2 der Gabel 51 auf das Vorderrad 22 übertragen. Diese Lenkkraftübertragung erfolgt somit nahezu direkt vom Lenker 53 zur Gabel 51.

Bei einer Schwenkbewegung des Lenkers 53 nach links schwenkt die Gabel 51 nach links, bei einer Schwenkbewegung des Lenkers 53 nach rechts schwenkt die Gabel 51 nach rechts.

Im Vergleich zur Patentanmeldung DE 10 2014 015 824.1, ist die Lenkung der erfindungsgemäßen Variante A1 einfach in der Funktion, günstig in der Herstellung und einfach in der Wartung, da sie kein Kardangelenk benötigt.

FIG.8, 9, 11 zeigen das Fahrrad der erfindungsgemäße Varianten A1 mit Armhebel 52 in der jeweils untersten Stellung seiner Schwenkbewegung.

FIG.10, 12 zeigen das Fahrrad der erfindungsgemäßen Variante A1 mit dem Armhebel 52 in der obersten Stellung seiner Schwenkbewegung.

Der Armhebel 52 der erfindungsgemäßen Variante A1 verfügt über Seile 61,62.

Die Umlenkrollen 61.3, 62.3 sind drehbar in Rollenböcken gelagert und diese Rollenböcke sind am Fahrradrahmen 7 befestigt.

Die Umlenkrollen 61.5, 62.5 sind drehbar auf dem Arm 51.2 der Gabel 51 gelagert.

Die Umlenkrolle 61.7 ist drehbar auf dem Arm 51.4 der Gabel 51 gelagert.

Das Seil 61 ist an einem Ende am Armhebel 52 festgebunden.

Das Seil 62 ist an einem Ende am Armhebel 52 festgebunden.

Das Seil 61 läuft über die Umlenkrollen 61.3, 61.5, 61.7.

Das Seil 62 läuft über die Umlenkrollen 62.3, 62.5.

Die erfindungsgemäße Variante A1 verfügt über einen Seilantrieb mit Kettenritzel 61.9, 62.9 Freiläufen 61.4, 62.4, Umlenkrollen 67.1, 69.1, Schraubenfeder 66, Seil 69 und Ketten 61.41, 62.41.(FIG.8, 10, 13).

Die erfindungsgemäße Varianten A1 hat eine Zugdruckantriebskraftübertragungsvorrichtung. Die Zugdruckantriebskraftübertragungsvorrichtung hat unter anderem Seile 61, 62, Ketten 61.41, 62.41, Kettenritzel 61.9, 62.9 und Freiläufe 61.4, 62.4. Mit dem Seil 62, Kettenritzel 62.9, Kette 62.41 und Freilauf 62.4 werden Kräfte übertragen bei denen der Fahrer, bei seiner Armantriebsbewegung, mit einem seinen Armen den Lenker 53 von sich weg drückt, also Druckantriebskräfte.

Mit dem Seile 61, Kettenritzel, Kette 61.41 und Freiläufen 61.4 werden Kräfte übertragen bei denen der Fahrer, bei seiner Armantriebsbewegung, mit seiner Arme den Lenker 53 zu sich hin zieht, also Zugantriebskräfte.

In erfindungsgemäßen Variante A1 sind die Kettenritzel 61.9, 62.9 jeweils fest mit dem äußeren Ring RA von jeweils einem Freilauf 61.4, 62.4 verbunden (FIG.13). Ein Freilauf besteht aus zwei Ringen RA und RI die drehbar zueinander gelagert sind. Jeder der Freiläufe 61.4, 62.4 hat jeweils einen inneren Ring RI und einen äußeren Ring RA. Wird Ring RA festgehalten, so ist der jeweils andere Ring RI frei in eine Richtung drehbar, jedoch verhindert ein Sperrmechanismus, dass der Ring RI nicht in die entgegen gesetzte Richtung, die so genannte Sperrrichtung, drehbar ist. Ein solcher Sperrmechanismus ist vorzugsweise wenigstens eine Sperrklinke oder wenigstens ein Klemmkeil oder wenigstens eine Klemmrolle. Diese Sperrklinken oder Klemmkeile oder Klemmrollen wirken nur in einer Drehrichtung der beiden Ringe RA und RI zueinander, in der entgegengesetzten Drehrichtung der beiden Ringe RA und RI zueinander geben sie die Sperrung frei. Der jeweils innere Ring RI der Freiläufe 61.4, 62.4 ist jeweils fest mit der Tretkurbelachse 8.1 des erfindungsgemäßen Fahrrades verbunden. Die Tretkurbelachse 8.1 ist über Lager 7.7, 7.8 drehbar im Fahrradrahmen 7 gelagert (FIG.7).

Die jeweils äußeren Ringe RA der Freiläufe 61.4, 62.4 sind jeweils relativ zu ihrem inneren Ring RI und somit relativ zur Tretkurbelachse 8.1 im Uhrzeigersinn 70, in FIG.8 gesehen, frei drehbar, jedoch verhindern Sperrklinken der Freiläufe 61.4, 62.4 dass der jeweils äußere Ring RA gegen den Uhrzeigersinn 71, in FIG.8 gesehen, relativ zum inneren Ring drehbar ist. Wenn also Kettenritzel 61.9, 62.9 gegen den Uhrzeigersinn 71, in FIG.8 gesehen, angetrieben werden, so rasten die Sperrklingen des jeweiligen Freilaufes 61.4, 62.4, der jeweilig gegen den Uhrzeigersinn 71, in FIG.8 gesehen, angetriebenen Kettenritzel 61.9, 62.9, ein und die Tretkurbelachse 8.1 wird mit gedreht.

Das Seil 62 ist an seinem einen Ende 62.1 am Armhebel 52 und an seinem anderen Ende 62.2 an einer Kette 62.41 festgebunden (FIG.8, 7). Das Seil 61 ist an seinem einen Ende 61.1 am Armhebel 52 und an seinem anderen Ende 61.2 an einer Kette 61.41 festgebunden (FIG.10, 7).

Die Kette 61.41 umschlingt das Kettenritzel 61.9 (FIG.10, 13).

Die Kette 62.41 umschlingt das Kettenritzel 62.9 (FIG.8, 13).

Zudem besitzt die erfindungsgemäßen Variante A1 eine Schraubenfeder 66. Außerdem besitzt die erfindungsgemäßen Variante A1 über zwei zusätzliche Umlenkrollen 67.1, 69.1 die drehbar auf dem Fahrradrahmen 7 gelagert sind (FIG.13). Die Schraubenfeder 66 ist an ihrem einen Ende an die Kette 62.41 befestigt und an ihrem anderen Ende an das Seil 69. Das Seil 69 läuft über die Umlenkrollen 67.1, 69.1 und ist an seinem einen Ende an ein Ende der Kette 61.41 befestigt.

Die Schraubenfeder 66 ist gespannt. Durch die Federspannung der Schraubenfeder 66 werden die Seile 61, 62, 69 und die Ketten 61.41, 62.41, gespannt.

Das Seil 69 und die Schraubenfeder 66 bewirken, dass sich wenn sich das Kettenritzel 61.9 gegen den Uhrzeigersinn 71, in FIG.8 gesehen, dreht, sich das Kettenritzel 62.9 im Uhrzeigersinn 70, in FIG.8 gesehen, dreht.

Das Seil 69 und die Schraubenfeder 66 bewirkt, dass sich wenn sich das Kettenritzel 62.9 gegen den Uhrzeigersinn 71, in FIG.8 gesehen, dreht, sich das Kettenritzel 61.9 im Uhrzeigersinn 70, in FIG.8 gesehen, dreht.

Die Freiläufe 61.4,62.4, ermöglichen es dem Fahrer das Fahrrad der erfindungsgemäßen Variante A1 entweder nur mit den Tretkurbeln 6 anzutreiben und gleichzeitig den Armhebel 52 stillstehen zu lassen oder mit dem Armhebel 52 und den Tretkurbeln 6 gleichzeitig anzutreiben.

Der Freilauf 61.4 ist so angeordnet (FIG.10, 13), dass sobald der Lenker 53 mit dem Armhebel 52, um die Achse 51.1 im Uhrzeigersinn 52.6, aus der Sicht in FIG.8 gesehen, geschwenkt wird, zieht er das Seil 61 und somit die Kette 61.41 und die Kette 61.41 dreht somit das Kettenritzel 61.9 gegen den Uhrzeigersinn 71, aus der Sicht in FIG.8 gesehen, und der Freilauf 61.4 rastet ein und dreht die Tretkurbelachse 8.1 und somit das Antriebskettenrad 9, die Antriebskette 4, das Antriebsritzel 10 und das Hinterrad 17 in Antriebsrichtung.

Der Freilauf 62.4 ist so angeordnet (FIG.8), dass sobald der Lenker 53 mit dem Armhebel 52, um die Achse 51.1 im Uhrzeigersinn 52.5, aus der Sicht in FIG.10 gesehen, geschwenkt wird, zieht Armhebel 52 das Seil 62 und zieht somit die Kette 62.41 und die Kette 62.41 dreht somit das Kettenritzel 62.9 gegen den Uhrzeigersinn 71, aus der Sicht in FIG.8 gesehen, und der Freilauf 62.4 rastet ein und dreht die Tretkurbelachse 8.1 und somit das Antriebskettenrad 9, die Antriebskette 4, das Antriebsritzel 10 und das Hinterrad 17 in Antriebsrichtung.

FIG. 8, 9, 11 zeigen das Fahrrad der erfindungsgemäßen Varianten A1 mit den Armhebeln 52 in der jeweils untersten Stellung seiner Schwenkbewegung.

FIG.10, 12 zeigen das Fahrrad der erfindungsgemäßen Varianten A1 mit den Armhebel 52 in der jeweils obersten Stellung seiner Schwenkbewegung.

Die erfindungsgemäße Variante A3 entspricht wenigstens einer der erfindungsgemäßen Varianten A, A1, jedoch ist in der erfindungsgemäßen Variante A3 der Abstand j größer als bei einem herkömmlichen Fahrrad. Der Abstand j ist der Abstand von der Mitte des Sattels 11 zum Tretlager. Dazu ist in der erfindungsgemäßen Variante A3 der Sattelrohrwinkel des Sattelrohrs 7.02 flacher als bei einem herkömmlichen Fahrrad. Bei einem herkömmlichen Fahrrad ist Fahrrad beträgt der Sattelrohrwinkel zwischen 70° und 75°. FIG.1, 18 zeigt den Sattelrohrwinkel h der erfindungsgemäßen Variante A3. In der erfindungsgemäßen Variante A3 beträgt der erfindungsgemäße Sattelrohrwinkel h zwischen 70° und 35°, vorzugsweise zwischen 65° und 40°, insbesondere zwischen 60° und 40°.

Alternativ, oder zusätzlich zum erfindungsgemäßen Sattelrohrwinkel h, verfügt das Fahrrad der erfindungsgemäßen Variante A3 über einen erfindungsgemäßen Rücksprung i der Sattelstütze von 0mm bis 200mm, vorzugsweise von 0mm bis 150mm, insbesondere von 0mm bis 130mm. Der erfindungsgemäße Rücksprung wird im allgemeinen Fahrradsprachgebrauch auch Sattelstützen Offset genannt,

Alternativ, oder zusätzlich zum erfindungsgemäßen Sattelrohrwinkel h, und oder erfindungsgemäßen Rücksprung i, hat die Sattelrohrmittelachse 7.02 einen Abstand as zum Tretlager. In dieser alternativen Ausführung der erfindungsgemäßen Variante A3 (FIG.1, 18) ist der Abstand as größer 50mm, vorzugsweise größer 100mm, insbesondere größer 150mm.

Indem sich bei der erfindungsgemäßen Variante A3 der Sattel weiter hinten befindet, als bei herkömmlichen Fahrrädern, ist in der erfindungsgemäßen Variante A3 auch das Hinterrad weiter hinten. Der erfindungsgemäße Abstand ah ist der Abstand der Hinterradachse zum Tretlager. Die erfindungsgemäße Variante A3 kann verschieden große Hinterräder haben. Beispielsweise 16 zoll, 20 zoll, 24 zoll, 26 zoll, 28 zoll oder 29 zoll. In der erfindungsgemäßen Variante A3 (FIG. 1) ist, bei einem 28 zoll Hinterrad 17, der Abstand ah größer 490mm, vorzugsweise größer 540mm, insbesondere größer 600mm.

In der erfindungsgemäßen Variante A3 ist, bei einem 29 zoll Hinterrad 17, der Abstand ah größer 500mm, vorzugsweise größer 550mm, insbesondere größer 610mm.

In der erfindungsgemäßen Variante A3 ist, bei einem 26 zoll Hinterrad 17, der Abstand ah größer 460mm, vorzugsweise größer 520mm, insbesondere größer 580mm.

In der erfindungsgemäßen Variante A3 (FIG.18) ist, bei einem 20 zoll Hinterrad 17, der Abstand ah größer 460mm, vorzugsweise größer 520mm, insbesondere größer 580mm.

Der Abstand av, ax, ist der Abstand des Vorderradaußendurchmessers zum Tretlager. Indem sich bei der erfindungsgemäßen Variante A3 der Sattel 11 weiter hinten befindet, als bei herkömmlichen Fahrrädern, kann in der erfindungsgemäßen Variante A3 auch das Vorderrad 22 weiter hinten sein. Denn wenn der Sattel 11 weiter hinten ist, sind die Füße während der Beinkurbelbewegung mehr nach hinten gekippt, also weniger waagrecht, und somit benötigen die Füße bei der Beinkurbelbewegung weniger Abstand zum Vorderrad 22 als bei herkömmlichen Fahrrädern, da die mehr nach hinten gekippten Füße, in der erfindungsgemäßen Variante A3, somit bei einem Einschwenken (Lenken) des Vorderrades weniger zu Kollision mit dem Vorderrad 22 tendieren. Deswegen kann der Abstand av kleiner sein, In einer bevorzugten Ausgestaltung der erfindungsgemäßen Variante A3 (FIG.1) ist das Vorderrad ein 26zoll Rad und der Abstand av ist kleiner 290mm, vorzugsweise kleiner 280mm, insbesondere kleiner 270mm.

In einer bevorzugten Ausgestaltung der erfindungsgemäßen Variante A3 (FIG.18) ist das Vorderrad ein 20zoll Rad und der Abstand ax ist kleiner 260mm, vorzugsweise kleiner 250mm, insbesondere kleiner 235mm.

In einer bevorzugten Ausgestaltung der erfindungsgemäßen Variante A3 hat die Achse 2.1 des Armhebels 2 einen Abstand k, zur Tretlagerachse 8.1, von 20mm bis 210mm, vorzugsweise von 40mm bis 170mm, insbesondere von 50mm bis 140mm (FIG.3, 20).

In einer bevorzugten Ausgestaltung der erfindungsgemäßen Variante A3 hat die Achse 2.1 des Armhebels 2 einen Abstand b, zur Tretlagerachse 8.1, von 420mm bis 630mm, vorzugsweise von 460mm bis 600mm, insbesondere von 490mm bis 570mm (FIG.3, 20).

Die erfindungsgemäße Variante L entspricht wenigstens einer der anderen erfindungsgemäßen Varianten, jedoch verfügt das Fahrrad der erfindungsgemäßen Variante L über einen Sattel 11 mit Rückenlehne (ohne Abbildung). Somit ähnelt die Sitzposition des Fahrrades der erfindungsgemäßen Variante L dem eines Sesselrades.

Die erfindungsgemäße Variante E entspricht wenigstens einer der anderen erfindungsgemäßen Varianten, jedoch verfügt das Fahrrad der erfindungsgemäßen Variante E über einen Lenker 31 der kein Rennradlenker ist. Der Lenker 31 der erfindungsgemäßen Variante E entspricht in etwa einem so genannten Mountainbike- oder Treckingradlenker (FIG.26, 27). Alternativ (ohne Abbildung) kann der Lenker auch ein so genannter Hollandrad- oder Bullhornlenker sein.

Der Lenker 31 ist fest mit dem Armhebel 2 verbunden. Lenkergriffe 31.1 sind fest mit dem Lenker 31 verbunden (FIG.26, 27).

FIG.26 zeigt eine schematische ISO Ansicht der erfindungsgemäßen Variante E.

FIG.27 zeigt eine schematische Seitenansicht der erfindungsgemäßen Variante E.

Der Lenker 31 macht bei seiner Schwenkbewegung einen Schwenkradius s um die Achse 2.1 (FIG.27). Der Schwenkradius s ist der Abstand der Achse 2.1 in etwa zur Mittelachse des Lenkers 31.

FIG. 27 zeigt das Fahrrad der erfindungsgemäßen Variante E mit Armhebel 2 in der jeweils vordersten Stellung seiner Schwenkbewegung.

FIG. 26 zeigt das Fahrrad der erfindungsgemäßen Variante E mit dem Armhebel 2 in der hintersten Stellung seiner Schwenkbewegung.

Die erfindungsgemäße Variante F entspricht wenigstens einer der erfindungsgemäßen Varianten A, A1, A3, L, E, B, B1, C, oder C1, jedoch verfügt das Fahrrad der erfindungsgemäßen Variante F über eine Vorderrad und oder eine Hinterradfederung.

Die erfindungsgemäße Variante B entspricht wenigstens einer der anderen erfindungsgemäßen Varianten, jedoch verfügt die erfindungsgemäße Variante B über keine Tretkurbeln 6.

Stattdessen verfügt die erfindungsgemäße Variante B über Tretkurbeln 5.2,5.3 mit Freiläufen 6.7,6.8.

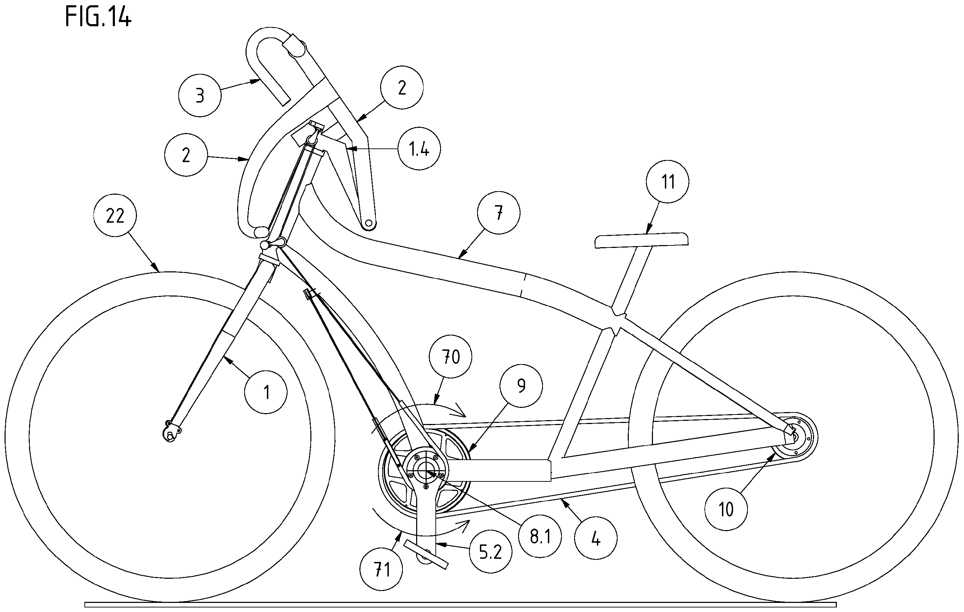

FIG.14 zeigt eine schematische Seitenansicht der erfindungsgemäßen Variante B.

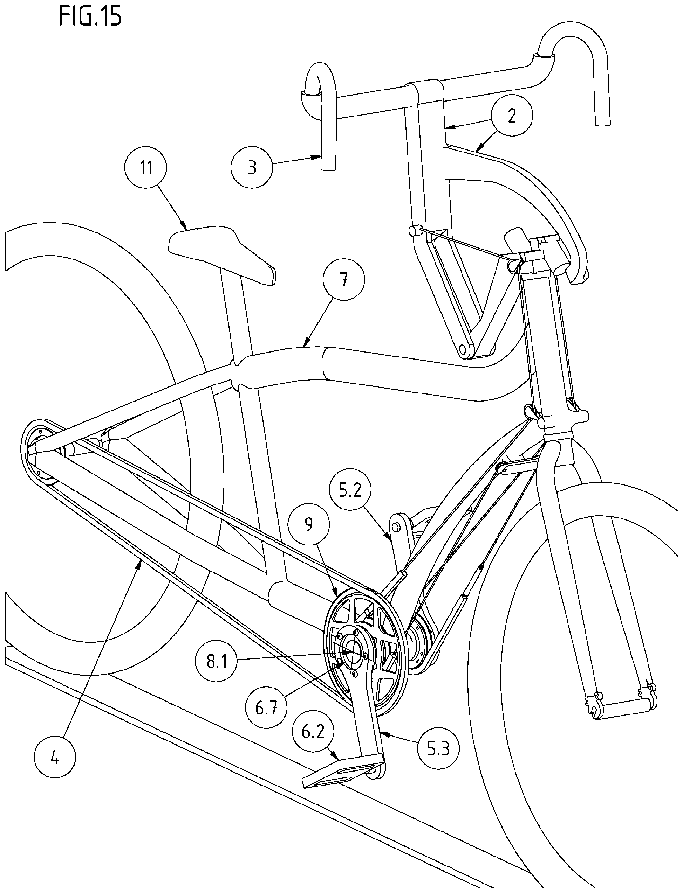

FIG.15 zeigt einen Ausschnitt einer schematischen ISO Ansicht der erfindungsgemäßen Variante B.

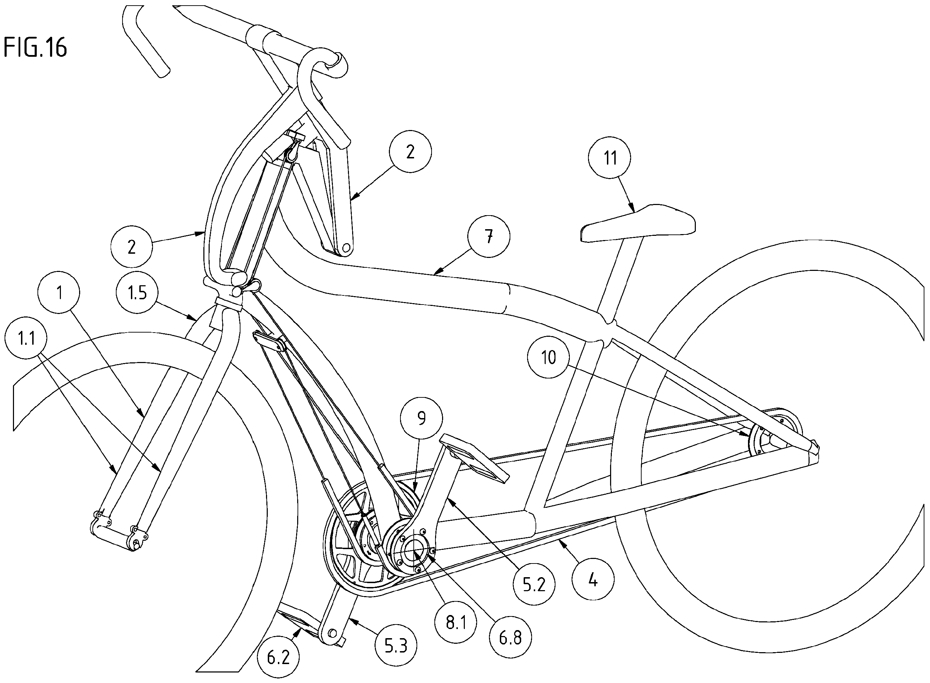

FIG.16 zeigt einen Ausschnitt einer schematischen ISO Ansicht der erfindungsgemäßen Variante B.

FIG.17 zeigt eine schematische Darstellung eines Schnittes durch den Tretlagerbereich und die Kettenritzel 61.9, 62.9, samt deren Freiläufe 61.4, 62.4, 6.7, 6.8, der erfindungsgemäßen Variante B.

In der erfindungsgemäßen Variante B ist das Antriebkettenrad 9 fest mit der Tretkurbelachse 8.1 verschraubt.

Der Beinkurbelantrieb der erfindungsgemäße Variante B verfügt über Tretkurbeln 5.2, 5.3. Eine der Tretkurbeln 5.2, 5.3 befindet sich auf der rechten und eine der Tretkurbeln 5.2, 5.3 befindet sich auf der linken Seite des Fahrrades der erfindungsgemäßen Variante B (FIG.14, 15, 17).

Im Gegensatz zu einem herkömmlichen Fahrrad ist in der erfindungsgemäßen Variante B die Beinkurbelmechanik, also die Verbindung der Tretkurbeln 5.2, 5.3 mit der Tretkurbelachse 8.1, anders ausgeführt. Bei der Beinkurbelmechanik der erfindungsgemäßen Variante B sind die Tretkurbeln 5.2, 5.3 mit Freiläufen 6.7,6.8 ausgestattet. Hierbei ist die linke Tretkurbel 5.2 über einen Freilauf 6.8 mit der Tretkurbelachse 8.1 verbunden. Die rechte Tretkurbel 5.3 ist über einen Freilauf 6.7 mit der Tretkurbelachse 8.1 verbunden.

An der einen Seite der Tretkurbelachse 8.1 befindet sich der Freilauf 6.8 und an der anderen Seite der Tretkurbelachse 8.1 der Freilauf 6.7 (FIG. 17). Die FIG.17 zeigt die schematische Darstellung eines Schnitts durch die Beinantriebsmechanik der erfindungsgemäßen Variante B. In FIG. 17 sind die Scheiben 58, 33 gestrichelt dargestellt. Die Scheiben 58, 33 sind nur in der erfindungsgemäßen Variante B1 vorhanden, nicht in diesem Ausführungsbeispiel der erfindungsgemäßen Variante B.

Die Freiläufe 6.7,6.8 sind im dargestellten Ausführungsbeispiel, der erfindungsgemäßen Variante B, Sperrklinkenfreiläufe.

Die Freiläufe 6.7, 6.8 entsprechen in ihrer Funktion den Freiläufen 61.4, 62.4.

Die Freiläufe 6.7, 6.8 haben jeweils einen inneren Ring und einen äußeren Ring, welche über drehbar zueinander gelagert sind.

Der jeweils innere Ring der Freiläufe 6.7, 6.8 ist über ein Gewinde fest mit der Tretkurbelachse 8.1 verschraubt. Der äußere Ring des Freilaufs 6.7 ist über mehrere Schrauben fest mit der Kurbel 5.3 verschraubt.

Der äußere Ring des Freilaufs 6.8 ist über mehrere Schrauben fest mit der Kurbel 5.2 verschraubt.

Die jeweils äußeren Ringe RA der Freiläufe 6.7, 6.8 sind jeweils relativ zu ihrem inneren Ring RI und somit relativ zur Tretkurbelachse 8.1 im Uhrzeigersinn 70, in FIG.14 gesehen, frei drehbar, jedoch verhindern Sperrklinken der Freiläufe 6.7, 6.8 dass der jeweils äußere Ring RA gegen den Uhrzeigersinn 71, in FIG.14 gesehen, relativ zum inneren Ring drehbar ist.

Wenn also die Tretkurbel 5.2 gegen den Uhrzeigersinn 71, in FIG.24 gesehen, angetrieben wird, so rasten die Sperrklingen des Freilaufes 6.8 ein und die Tretkurbelachse 8.1 wird mitgedreht. Wird die Tretkurbel 5.2 im Uhrzeigersinn 70, in FIG.24 gesehen, gedreht, dann sind die Sperrklinken des Freilaufes 6.8 inaktiv und die rechte Tretkurbel 5.2 kann sich drehen ohne dass sich dabei die Tretkurbelachse 8.1 mitgedreht.

Wenn die Tretkurbel 5.3 gegen den Uhrzeigersinn 71, in FIG. 14 gesehen, angetrieben wird, so rasten die Sperrklingen des Freilaufes 6.7 ein und die Tretkurbelachse 8.1 wird mitgedreht. Wird die Tretkurbel 5.3 im Uhrzeigersinn 70, in FIG.14 gesehen, gedreht, dann sind die Sperrklinken des Freilaufes 6.7 inaktiv und die Tretkurbel 5.3 kann sich drehen ohne dass sich dabei die Tretkurbelachse 8.1 mitgedreht.

Wenn also eine, oder beide, der Tretkurbeln 5.2, 5.3, gegen den Uhrzeigersinn 71, in FIG.14 gesehen, angetrieben wird, so rasten die Sperrklingen des jeweiligen Freilaufes 6.7, 6.8 ein und die Tretkurbelachse 8.1 und somit das Antriebskettenrad 9 wird mit gedreht und dann treibt die Antriebskette 4 über das Antriebsritzel 10 das Hinterrad 17 an.

Das erfindungsgemäße Fahrrad hat für den Fahrradfahrer den Vorteil, dass er während der Fahrt von synchronen, auf asynchronen Beinantrieb, oder auf Varianten-Antrieb wechseln kann.

Beim so genannten asynchronen Antrieb sind die Tretkurbeln 5.2, 5.3 in einem Winkel von in etwa 180° zueinander angeordnet (FIG. 15).

Beim synchronen Beinantrieb stehen die Tretkurbeln 5.2, 5.3 in einem Winkel von in etwa 0° zueinander, sie stehen somit in etwa parallel zueinander und die Tretkurbelbewegungen sind synchron zueinander (FIG. 14, 16, 17). Außer dem synchronen auf asynchronen Antrieb hat der Fahrer der erfindungsgemäßen Variante B noch die Möglichkeit die Tretkurbeln im so genannten Varianten-Antrieb zu fahren. Beim Varianten-Antrieb kann man in weiteren Einrastpositionen, also Winkelandordnungen der Tretkurbeln 5.2, 5.3 zueinander fahren. Im Ausführungsbeispiel der Freiläufe 6.7, 6.8 gibt es jeweils 20 Einrastpositionen der Sperrklinken in deren jeweiligen 20 Zähnen. Diese 20 Einrastpositionen entsprechen jeweils 20 verschiedenen Winkelpositionen der jeweiligen Kurbel 5.2, 5.3 zur gemeinsamen Tretkurbelachse 8.1.

Der Vorteil eines möglichen Wechsels von synchronem zu asynchronem zu Varianten-Antrieb ist, dass bei den verschiedenen Kurbelstilen die Belastung auf die Muskeln des Fahrers unterschiedlich ist. Beim synchronen Kurbelstil werden vor allem bei der nach vorne gerichteten Tretbewegung die untere Rückenmuskulatur belastet und trainiert. Bei der nach hinten gerichteten Zugbewegung der Beine wird vor allem die Bauchmuskulatur belastet und trainiert. Beim asynchronen Kurbelstil wird aufgrund der gleichzeitigen Zugbewegung des einen Beines und der Druckbewegung des anderen Beines sind der Bauch und Rücken des Fahrers entlastet und können sich erholen. Indem der Fahrer so die Kurbelstile wechseln kann, so kann er dadurch die Belastung seiner Muskulatur wechseln. Er kann so bereits während seiner Fahrt einzelne Muskelgruppen entlasten und erholen und kann so länger und ausdauernder Fahren.

Zum Antrieb des Fahrrades bewegt der Fahrer mit seinen Händen den Lenker 3, 31, 53, samt dem Armhebel 2, 52, und mit seinen Füßen die Tretkurbeln 5.2, 5.3. Auf den Tretkurbeln 5.2, 5.3 sind die Pedale 6.2 drehbar gelagert.

Die Freiläufe 6.7, 6.8, 61.4, 62.4 ermöglichen es dem Fahrer das erfindungsgemäße Fahrrades der erfindungsgemäßen Variante B entweder mit dem Armhebel 2 anzutreiben und gleichzeitig die Tretkurbeln 5.2, 5.3 stillstehen zu lassen, oder nur mit den Tretkurbeln 5.2, 5.3 anzutreiben, oder mit dem Armhebel 2, 52 und Tretkurbeln 5.2, 5.3 gleichzeitig anzutreiben, oder nur einer Tretkurbel 5.2, 5.3 anzutreiben und die jeweilig andere Tretkurbel 5.2, 5.3 und den Armhebel 2, 52 still stehen zu lassen, oder mit nur einer Tretkurbel 5.2, 5.3 und dem Armhebel 2, 52 gleichzeitig anzutreiben.

Die erfindungsgemäße Variante B1 entspricht der erfindungsgemäßen Varianten B. Jedoch verfügt die Beinkurbelmechanik der erfindungsgemäße Variante B1 über wenigstens eine Sperr- und Entsperrfunktion wenigstens einer Tretkurbel 5.2, 5.3 des Beinantriebes zur Tretkurbelachse 8.1 des Beinantriebes. Die Funktionsweise dieser Sperr- und Entsperrfunktion ist in den Varianten B, D, D1, E, EA, EE, F, H oder H1 der Deutschen

Patentanmeldung Aktenzeichen DE 10 2016 001 286 A1 beschrieben. Hinsichtlich der konstruktiven Eigenschaften und verfahrenstechnischen Aspekte wird auf die Deutschen Patentanmeldung Aktenzeichen DE 10 2016 001 286 A1 verwiesen. Der Inhalt dieser Anmeldungen wird hiermit vollinhaltlich zum Gegenstand der Beschreibung gemacht.

In einem Ausführungsbeispiel der erfindungsgemäße Variante B1 (FIG.17) verfügt über die Tretkurbelsperr- und Entsperrfunktion, unter anderem über Entsperrhebel 67 und Sperrhebel 88 und Scheiben 58, 33, aus der Erfindung der Deutschen Patentanmeldung Aktenzeichen DE 10 2016 001 286 A1.

Die Funktion der Sperr- und Entsperrelemente, die als Entsperrhebel 67 und Sperrhebel 88 ausgeführt sind, sind im Textstück [0061] auf Seite 5/76 der Offenlegungsschrift der Deutschen Patentanmeldung Aktenzeichen DE 10 2016 001 286 A1 beschrieben.

FIG.17 zeigt die schematische Darstellungen des Schnitts durch die Beinantriebsmechanik der erfindungsgemäßen Variante B1.

In FIG.17 sind die Scheiben 58, 33 gestrichelt dargestellt, die Entsperrhebel 67 und Sperrhebel 88 sind nicht dargestellt.

Die Scheiben 58, 33 sind fest mit der Tretkurbelachse 8.1 verbunden. Mit der Scheibe 33 sind die Sperrbolzen 65,66 (nicht dargestellt) fest verbunden. Mit der Scheibe 58 sind die Sperrbolzen 78, 79 (nicht dargestellt) fest verbunden.

Mittels dieser Tretkurbelsperrfunktion kann wahlweise, über die Sperrhebel 88, die Tretkurbel 5.2 und oder die Tretkurbel 5.3 relativ zur Tretkurbelachse 8.1 gesperrt werden und somit eine synchrone oder asynchrone Kurbelposition erreicht werden.

Die erfindungsgemäße Variante C entspricht wenigstens einer der erfindungsgemäßen Varianten A, A1, A3, L, E, F, B, oder B1, jedoch ist die erfindungsgemäße Variante C ein Fahrrad zum Transport von Dingen oder Lasten, das Fahrrad der erfindungsgemäßen Variante C ist ein so genanntes Lastenrad oder so genanntes Cargobike (ohne Abbildung).

Die erfindungsgemäße Variante C1 entspricht der erfindungsgemäßen Variante C, jedoch hat das Lastenrad der erfindungsgemäßen Variante C1 anstatt von einem Vorderrad, zwei Vorderräder. Die erfindungsgemäße Variante C1 (ohne Abbildung) ist ein Dreirad, bei dem der mittlere und hintere Teil des Rahmens dem eines Fahrrades, wie in der erfindungsgemäßen Variante C, entspricht, mit dem kombinierten Arm- und Beinantrieb der erfindungsgemäßen Variante C, also mit Antrieb über den Armhebel 2 und die Tretkurbeln 6 und dem Sattel 11 für ein aufrechtes Sitzen, und dem Antrieb über das Hinterrad 17, nur dass eben der vordere Teil des Rahmens dem eines Dreirades für Erwachsene mit zwei lenkenden Vorderrädern gleicht. Ein solches Dreirad für Erwachsene mit zwei lenkenden Vorderrädern ist das Model "Viktor", Modellausführung April 2023, der Firma VanRaam. In der erfindungsgemäßen Variante C1 beinhaltet der vordere Rahmen eine Lenkung über die Vorderräder, eine bekannte Ackermann Lenkung. Jedoch erfolgt die Lenkkraftübertragung in der erfindungsgemäßen Variante C1 nicht über einen Lenker wie bei dem Model "Viktor", der Firma VanRaam, sondern in der erfindungsgemäßen Variante C1 wird die Lenkkraft über eine Seilzuglenkung auf die Ackermannlenkung der Vorderräder übertragen. Dazu ist der erfindungsgemäßen Variante C1 eine Seilscheibe der Seilzuglenkung fest mit der Lenkachse der Ackermannlenkung verbunden und eine Seilscheibe der Seilzuglenkung ist fest mit dem Vorbau 1.4 verbunden. Dreht der Fahrer, bei erfindungsgemäßen Variante C, den Lenker 3 so lenkt er mittels der Seilzuglenkung die beiden Vorderräder.

Die erfindungsgemäße Variante G entspricht wenigstens einer der erfindungsgemäßen Varianten A, A1, A3, L, E, B, oder B1, jedoch ist die erfindungsgemäße Variante G als Standausführung, also als Heimtrainer ausgeführt. Ein so genannten Heimtrainer wird auch Ergometer, Ergotrainer, Speedbike, Indoorcycle oder Indoor-Fahrrad genannt. Ein Heimtrainer ist eine Standausführung für die stationäre Verwendung und ist nur für den Indoorgebrauch konzipiert. Diese Standausführung steht auf der Aufstandsfläche B und kann nicht auf der Straße betrieben werden. Der Rahmen 7 und die komplette Antriebseinheit der erfindungsgemäßen Variante G entspricht der erfindungsgemäßen Variante A, A1, A3, L, E, B, oder B1 (ohne Abbildung).

Im Gegensatz zu den anderen erfindungsgemäßen Varianten verfügt die erfindungsgemäße Variante G über kein Vorderrad, kein Hinterrad, keine Gabel und kein Lenkkopflager. In der erfindungsgemäßen Variante G ist der Vorbau 1.4 fest mit dem Rahmen 7 verbunden. Der Rahmen 7 der erfindungsgemäße Variante G, hat zusätzliche Standfüße die fest mit dem Rahmen 7 verbunden sind. Somit steht der erfindungsgemäße Heimtrainer über die Standfüße auf der Aufstandsfläche B.

Anstatt einem Hinterrad hat die erfindungsgemäßen Variante G als Antriebsrad ein Schwungrad. Dieses treibt der Benutzer, mittels der Antriebskette 4, an. Die Antriebskette 4 treibt über das Antriebskettenrad 9 und über das Antriebsritzel 10 das Schwungrad an. Indem das Schwungrad von einer Bremse dosiert gebremst wird, wird so ein Antriebswiderstand erzeugt der dem Trainingseffekt für den Benutzer dient. Ein solches Schwungrad mit Bremse entspricht denen von bekannten Indoor-Fahrrädern oder auch Indoorcyles. Wie bei herkömmlichen Indoor-Fahrrädern ist die Bremse eine mechanisch arbeitende Backenbremse, deren Bremsbacken beim Bremsen an das Schwungrad gedrückt werden und so einen Bremswiderstand erzeugen. Das Schwungrad kann in beide Drehrichtungen angetrieben und auch gebremst werden.

Eine erfindungsgemäße Variante G6 entspricht der erfindungsgemäßen Varianten G, welche über wenigstens eine Reibbremse verfügt. Jedoch verfügt die erfindungsgemäße Variante G6, anstatt wenigstens einer Reibbremse über wenigstens eine hydrostatische oder eine Induktionsbremse (ohne Abbildung), welche die Aufgabe der ersetzten Reibbremse übernimmt.

Die Patentansprüche kennzeichnen den Schutzumfang. Die Beschreibung sind Ausführungsbeispiele des erfinderischen Gedankens.

### Nummerierung entsprechend den Zeichnungen:

1 Gabel
1.1 Gabelwangen
1.2 Gabelschaftrohr
1.3 Lenkkopflager
1.4 Vorbau
1.5 Gabeleinheit
2 Armhebel
2.1 Achse
2.2 gegen Uhrzeigersinn
2.3 im Uhrzeigersinn
2.4 Seilarm
2.5 Achse
3 Lenker
3.1 Welle
3.2 Achse
3.3 Griffe
4 Antriebskette
5 Welle
5.1 Synchronkettenblatt
5.2 Tretkurbel
5.3 Tretkurbel
6 Tretkurbel
6.1 Achse
6.2 Pedale
7 Rahmen
7.01 Sattelrohr
7.02 Mittelachse Sattelrohr
7.1 Konsole
7.2 Konsole
7. 3 Fahrradmittelebene
7.7 Lager
7.8 Lager
8.1 Tretkurbelachse
8.2 Freilauf
8.3 gegen den Uhrzeigersinn
8.4 im Uhrzeigersinn
9 Antriebskettenrad
10 Antriebsritzel
11 Sattel
11.1 Sattelstütze
12 Kette
13 Synchronkettenblatt
17 Hinterrad
22 Vorderrad
22.1 Achse
23 Bowdenzughalter
24 Bowdenzughalter
25 Bowdenzug
26 Bowdenzug
25.1 Hülle
26.1 Hülle
27 Seilrolle
28 Seilrolle
31 Lenker
31.1 Lenkergriff
37 Lenkachse
51 Gabel
51.1 Achse
51.2 Arm
51.3 Gabelschaftrohr
51.4 Arm
51.5 Gabeleinheit
51.6 Gabelwangen
52 Armhebel
52.1 Handgriff
52.3 Achse
52.4 Stelle
52.5 im Uhrzeigersinn
52.6 gegen Uhrzeigersinn
52.7 Zentrumspunkt
52.8 Längsachse
53 Lenker
61.1 Ende
61.2 Ende
61.3 Umlenkrolle
61.31 Rollenbock
61.32 Ringöse
61.4 Freilauf
61.41 Kette
61.42 Ende
61.5 Umlenkrolle
61.51 Umlenkrolle
61.6 Rollenbock
61.7 Umlenkrolle
61.8 Rollenbock
61.81 Ringöse
61.9 Kettenritzel
62.1 Ende
62 Seil
62.1 Ende
62.2 Ende
62.3 Rollenbock
62.31 Ringöse
62.4 Freilauf
62.41 Kette
62.5 Umlenkrolle
62.51 Umlenkrolle
62.6 Rollenbock
62.61 Ringöse
62.7 Umlenkrolle
62.8 Umlenkrolle
62.81 Rollenbock
62.82 Ringöse
62.9 Kettenritzel
64 im Uhrzeigersinn
65 gegen Uhrzeigersinn
66 Schraubenfeder
67.1 Umlenkrolle
68 Spiralfeder
69 Seil
69.1 Umlenkrolle
70 im Uhrzeigersinn
71 gegen Uhrzeigersinn

## Patentansprüche

1. Fahrrad oder Lastenrad, mit wenigstens zwei Rädern, oder Heimtrainer, mit wenigstens einem Armantrieb und wenigstens einem Tretkurbelantrieb, insbesondere zum Durchführen des Verfahrens nach einem der Ansprüche 7 bis 9, **dadurch gekennzeichnet, dass** das Fahrrad wenigstens einen Armhebel (2, 52) besitzt, der um wenigstens eine Achse (2.1, 51.1) schwenkbar gelagert ist.

2. Fahrrad, oder Lastenrad, oder Heimtrainer, nach Anspruch 1, **dadurch gekennzeichnet, dass** der Armhebel 2 schwenkbar auf einer Gabeleinheit (1.5, 51.5) gelagert ist.

3. Fahrrad, oder Lastenrad, oder Heimtrainer, nach einem der Ansprüche 1 bis 2, **dadurch gekennzeichnet, dass** es wenigstens ein Seil (61, 62) besitzt.

4. Fahrrad, oder Lastenrad, oder Heimtrainer, nach einem der Ansprüche 1 bis 3, **dadurch gekennzeichnet, dass** ein Abstand z zwischen 30mm und 300 mm, vorzugsweise zwischen 50mm und 250 mm, insbesondere zwischen 110mm und 190 mm beträgt oder dass ein Abstand zb zwischen 0mm und 150 mm, vorzugsweise zwischen 20mm und 130 mm, insbesondere zwischen 60mm und 110 mm, beträgt.

5. Fahrrad, oder Lastenrad, oder Heimtrainer, nach einem der Ansprüche 1 bis 4, **dadurch gekennzeichnet, dass** sich die Tretlagerposition zwischen dem Vorderrad 22 und dem Hinterrad 17 befindet.

6. Fahrrad, oder Lastenrad, oder Heimtrainer, nach einem der Ansprüche 1 bis 5, **dadurch gekennzeichnet, dass** es über eine Zugdruckantriebskraftübertragungsvorrichtung verfügt.

7. Verfahren zum Benutzen eines Fahrrades, oder Lastenrads, oder Heimtrainers, insbesondere zum Fahren eines Fahrrades, oder Lastenrads, oder Heimtrainers, nach einem der Ansprüche 1 bis 6, **dadurch gekennzeichnet, dass** der Fahrradfahrer das Fahrrad mit wenigstens einer Armschwenkbewegungen antreiben kann.

8. Verfahren nach Anspruch 7, **dadurch gekennzeichnet, dass** das Schwenken des wenigstens einem schwenkbaren Armhebels (2, 52) in Druckrichtung das Antriebskettenblatt 9 in Antriebsrichtung treibt und das Schwenken des wenigstens einem schwenkbaren Armhebels (2, 52), in Zugrichtung das Antriebskettenblatt 9 in die gleiche Antriebsrichtung treibt.

9. Verfahren nach einem der Ansprüche 7 bis 8, **dadurch gekennzeichnet, dass** eine Armantriebskraft in Druckrichtung über wenigstens ein Seil 62 übertragen wird und dass eine Armantriebskraft in Zugrichtung über wenigstens ein Seil 61 übertragen wird.

10. Verwendung eines Fahrrades, oder Lastenrads, oder Heimtrainers, nach einem der Ansprüche 1 bis 9.
